(19) Europäisches Patentamt
European Patent Office
Office européen des brevets

(11) **EP 4 488 731 A1**

(12) **EUROPEAN PATENT APPLICATION**
published in accordance with Art. 153(4) EPC

(43) Date of publication:
**08.01.2025  Bulletin 2025/02**

(21) Application number: 23763324.3

(22) Date of filing: **22.02.2023**

(51) International Patent Classification (IPC):
**G02B 6/32** $^{(2006.01)}$       **G02B 6/02** $^{(2006.01)}$

(52) Cooperative Patent Classification (CPC):
**G02B 6/02; G02B 6/32**

(86) International application number:
**PCT/JP2023/006360**

(87) International publication number:
**WO 2023/167065 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **04.03.2022  JP 2022033826**

(71) Applicant: **Kohoku Kogyo Co., Ltd.**
**Nagahama-shi, Shiga 529-0241 (JP)**

(72) Inventors:
• **IWASAKI Katsuhiro**
  **Nagahama-shi, Shiga 529-0241 (JP)**
• **KIRIYAMA Tomoaki**
  **Nagahama-shi, Shiga 529-0241 (JP)**

(74) Representative: **J A Kemp LLP**
**80 Turnmill Street**
**London EC1M 5QU (GB)**

(54) **FAN-IN/FAN-OUT DEVICE**

(57)    The FIFO device (10) includes an MCF (20), a first lens (30) having a first optical axis parallel to a center axis of the MCF, a group of second lenses (40) including a plurality of second lenses (41 to 44) each having a second optical axis parallel to the first optical axis, and a group of single-core optical fibers (50) including the same number of single-core optical fibers (51 to 54) as the second lenses. When defining a maximum value of a beam waist distance sum at the time when an inter-lens distance between the first lens and each of the second lenses is equal to the beam waist distance sum as a distance sum maximum value, in a case when the inter-lens distance is set to the distance sum maximum value, the MCF (20), the first lens (30), the group of the second lenses (40), and the group of the single-core optical fibers (50) are arranged such that the beam waist distance sum is 91.5% or more of the distance sum maximum value.

FIG.11C

EP 4 488 731 A1

['\n\n']

## Description

### Technical Field

The present invention relates to a Fan-in/Fan-out device. Specifically, the present invention relates to a spatially coupled Fan-in/Fan-out device that includes a multi-core optical fiber and a plurality of single-core optical fibers, and optically couples them.

### Background Art

Internet communication traffic demands are increasing year by year, and optical communication has been desired to achieve higher speed and larger capacity. Hitherto, in order to respond to those demands, a wavelength division multiplexing (WDM) technology, a digital coherent technology, and other technologies have been used to promote an increase in transmission capacity.

In recent years, as a new multiplexing technology, a space division multiplexing (SDM) technology using a multi-core optical fiber is gathering attention. It is said that the SDM technology allows further higher speed and further larger capacity to be achieved. Along with the progress of research and development of the SDM technology, demands for a Fan-in/Fan-out device (hereinafter also referred to as "FIFO") have been increased. An FIFO device is an optical device that includes a multi-core optical fiber and a plurality of single-core optical fibers, and optically couples them.

As examples of FIFO devices, spatially coupled, fiber bundle, and fusion-drawn devices can be mentioned, for example. A spatially coupled FIFO device is characterized by optically coupling a multi-core optical fiber and a single-core optical fiber using a lens (including a glass block, and the like) (refer to Patent Literature 1). Hereinafter, the spatially coupled FIFO device will be simply referred to as a "FIFO device."

### Citation List

### Patent Literature

[PTL 1] JP 6554891 B2

### Summary of Invention

### (Technical Problem)

The FIFO device includes a first lens arranged at a multi-core optical fiber side, and a plurality of second lenses arranged at a side of a plurality of single-core optical fibers. In the FIFO device, a light beam emitted from one of the multi-core optical fiber or the single-core optical fibers passes through the first lens and the second lenses to enter the other one of the multi-core optical fiber or the single-core optical fibers. Optical coupling loss becomes zero when an incident end face beam diameter, which is a beam diameter of the light beam at an end face of the other optical fiber, matches a mode field diameter of that optical fiber.

Here, if an error occurs in a first distance between the multi-core optical fiber and the first lens, or in a second distance between each of the single-core optical fibers and a corresponding second lens, a beam waist diameter (and a beam waist position) of the light beam changes. As a result, the incident end face beam diameter no longer matches the mode field diameter, leading to an increase in optical coupling loss. Therefore, when manufacturing the FIFO device, it is desirable to minimize errors in the first distance and the second distance.

However, since it is difficult to avoid the occurrence of minor errors in the first distance and the second distance during manufacturing process, there is a demand for developing an FIFO device capable of suppressing the increase in optical coupling loss (i.e., making the optical coupling loss less likely to increase) even if the beam waist diameter changes due to these errors.

In addition, in the FIFO device, an end face of the multi-core optical fiber may be obliquely polished in order to reduce reflected return light. In this case, variations (differences) in the first distance may occur depending on the number of cores, a core arrangement, or the like of the multi-core optical fiber, resulting in variations in the beam waist diameter. For example, when two types of variations occur in the first distance by the oblique polishing of the end face of the multi-core optical fiber, there are two different values in the beam waist diameter, resulting in variations. Variations in the beam waist diameter lead to the increase in optical coupling loss. Therefore, it is desirable to suppress the increase in optical coupling loss not only when the beam waist diameter changes due to manufacturing errors, but also when the beam waist diameter varies due to the oblique polishing of the end face of the multi-core optical fiber.

The present invention has been made to solve the above-mentioned problem. That is, the present invention has one object to provide technique capable of suppressing an increase in optical coupling loss even when a beam waist diameter changes or when there arise variations in the beam waist diameter.

### (Solution to Problem)

According to one embodiment of the present invention, there is provided a Fan-in/Fan-out device (10) including: a multi-core optical fiber (20) which has a pillar shape, and includes a plurality of first cores (C1 to C4) extending along an axial direction, and a common cladding (CL) surrounding the plurality of first cores; a first lens (30) having a first optical axis parallel to a center axis of the multi-core optical fiber (20), and being arranged so as to face the multi-core optical fiber; a group of second lenses (40) including a plurality of second lenses (41 to 44) each having a second optical axis parallel to the first optical axis; and a group of single-core optical fibers (50) including the same number of single-core optical fibers (51 to 54) as the number of the second lenses (41 to 44), each single-core optical fiber having a pillar shape, and including one second core (C) extending along a center axis parallel to the second optical axis and a cladding (CLs) surrounding the second core (C), and being configured to propagate light beam in either one direction of a first progress direction and a second progress direction, the first progress direction being a progress direction of light beams which are emitted from the respective first cores (C1 to C4) of the multi-core optical fiber (20), pass through the first lens (30) and the second lenses (41 to 44) corresponding to the respective first cores, and converge on the respective second cores (C) of the single-core optical fibers (51 to 54) corresponding to the second lenses, and the second progress direction a being a progress direction of light beams which are emitted from the respective second cores, pass through the corresponding second lenses and the first lens, and converge on the respective first cores corresponding to the second lenses.

When defining a beam waist diameter of each of the light beams exited from the first lens (30) as a first beam waist diameter ($2\Omega1$), and defining a distance from the first lens to a beam waist position in a progress direction of a principal ray of each of the light beams as a first beam waist distance (D1) based on an assumption that the light beams propagate in the first progress direction, defining a beam waist diameter of each of the light beams exited from the respective second lenses (41 to 44) as a second beam waist diameter ($2\Omega2$), and defining a distance from the second lenses to a beam waist position in a progress direction of a principal ray of each of the light beams as a second beam waist distance (D2) based on an assumption that the light beams propagate in the second progress direction, and defining a maximum value of a beam waist distance sum (D1 + D2) at a time when an inter-lens distance (Z) is equal to the beam waist distance sum as a distance sum maximum value (D1 + D2_max), the inter-lens distance being a distance between the first lens (30) and the respective second lenses (41 to 44) in a progress direction of a principal ray of each of the light beams, and the beam waist distance sum being a sum of the first beam waist distance (D1) and the second beam waist distance (D2) at a time when the first beam waist diameter ($2\Omega1$) matches the second beam waist diameter ($2\Omega2$),

the multi-core optical fiber (20), the first lens (30), the group of the second lenses (40), and the group of the single-core optical fibers (50) are arranged such that the inter-lens distance (Z) is substantially equal to the distance sum maximum value (D1 + D2_max), and the beam waist distance sum (D1 + D2) is 91.5% or more of the distance sum maximum value.

According to one embodiment of the present invention, there is provided another Fan-in/Fan-out device including: a multi-core optical fiber (20p) which has a pillar shape, and includes a plurality of first cores (C1 to C4) extending along an axial direction, and a common cladding (CL) surrounding the plurality of first cores; a first lens (30) having a first optical axis parallel to a center axis of the multi-core optical fiber (20p), and being arranged so as to face the multi-core optical fiber; a group of second lenses (40) including a plurality of second lenses (41 to 44) each having a second optical axis parallel to the first optical axis; and a group of single-core optical fibers (50) including the same number of single-core optical fibers (51 to 54) as the number of the second lenses (41 to 44), each single-core optical fiber having a pillar shape, and including one second core (C) extending along a center axis parallel to the second optical axis and a cladding (CLs) surrounding the second core (C), and being configured to propagate light beam in either one direction of a first progress direction and a second progress direction, the first progress direction being a progress direction of light beams which are emitted from the respective first cores (C1 to C4) of the multi-core optical fiber (20p), pass through the first lens (30) and the second lenses (41 to 44) corresponding to the respective first cores, and converge on the respective second cores (C) of the single-core optical fibers (51 to 54) corresponding to the second lenses, and the second progress direction a being a progress direction of light beams which are emitted from the respective second cores, pass through the corresponding second lenses and the first lens, and converge on the respective first cores corresponding to the second lenses.

When defining a beam waist diameter of each of the light beams exited from the first lens (30) as a first beam waist diameter ($2\Omega1$), and defining a distance from the first lens to a beam waist position in a progress direction of a principal ray of each of the light beams as a first beam waist distance (D1) based on an assumption that the light beams propagate in the first progress direction, defining a beam waist diameter of each of the light beams exited from the respective second lenses (41 to 44) as a second beam waist diameter ($2\Omega2$), and defining a distance from the second lenses to a beam waist position in a progress direction of a principal ray of each of the light beams as a second beam waist distance (D2) based on an assumption that the light beams propagate in the second progress direction, and defining a maximum value of a beam waist distance sum (D1 + D2) at a time when an inter-lens distance (Z) is equal to the beam waist distance sum as a distance sum maximum value (D1 + D2_max), the inter-lens distance being a distance between the first lens (30) and the respective second lenses (41 to 44) in a progress direction of a principal ray of each of the light beams, and the beam waist distance sum being a sum of the first beam waist distance (D1) and the second beam waist distance (D2) at a time when the first beam waist diameter ($2\Omega1$) matches the second beam waist diameter ($2\Omega2$),

an end face (20ap) of the multi-core optical fiber (20p) is obliquely polished so as to incline in a predetermined inclination direction with respect to a plane orthogonal to a center axis thereof by a predetermined polishing angle, and thereby occurring n types of variations in a distance (d1(1) to d1(4)) between the respective first cores (C1 to C4) and the first lens (30) in a progress direction of a principal ray of each light beam, and occurring n types of variations in the first beam waist diameter ($2\Omega1$) of each of the light beams emitted from the respective first cores,

each of the single-core optical fibers (51 to 54) is arranged with respect to the corresponding second lens (41 to 44) such that the second beam waist diameter ($2\Omega2$) of the light beam corresponding to each of the single-core optical fiber matches the corresponding first beam waist diameter ($2\Omega1$).

Further, when defining the first and the second beam waist diameters ($2\Omega1 = 2\Omega2$) at the time when the beam waist distance sum (D1 + D2) is the distance sum maximum value (D1 + D2_max) as a beam-waist-diameter-at-maximum-distance ($\Omega$_Dmax), and defining a maximum value and a minimum value of n types of the first and the second beam waist diameters as a beam waist maximum diameter ($2\Omega max$) and a beam waist minimum diameter ($2\Omega min$), respectively, the multi-core optical fiber (20p) is arranged with respect to the first lens (30) at such a position that the beam waist maximum diameter ($2\Omega max$) is greater than the beam-waist-diameter-at-maximum-distance ($\Omega$_Dmax), and the beam waist minimum diameter ($2\Omega min$) is smaller than the beam-waist-diameter-at-maximum-distance.

(Advantageous Effects of Invention)

According to the present invention, it is possible to suppress an increase in optical coupling loss even when a beam waist diameter changes or when variations occur in the beam waist diameter.

Brief Description of Drawings

FIG. 1 is a perspective view of a FIFO device according to a first embodiment of the present invention.
FIG. 2 is a side view of the FIFO device.
FIG. 3 is a diagram for illustrating an end face of a multi-core optical fiber included in the FIFO device.
FIG. 4 is a diagram for illustrating a manner in which a principal ray of emission light beam emitted from a certain core of the multi-core optical fiber passes through a corresponding second lens.
FIG. 5 is a diagram for illustrating an end face of a single-core optical fiber included in the FIFO device.
FIG. 6 is a diagram used to describe on a first beam waist diameter $2\Omega1$ and a first beam waist distance D1.
FIG. 7 is a diagram used to describe on a second beam waist diameter $2\Omega2$ and a second beam waist distance D2.
FIG. 8A is a graph for defining a relationship between a distance d2 from each of the single-core optical fibers to a corresponding second lens and the second beam waist distance D2.
FIG. 8B is a graph for defining a relationship between the distance d2 and the second beam waist radius $\Omega2$.
FIG. 9 is a diagram for illustrating a positional relationship of configuration elements in a case when a coupling loss of the FIFO device is zero.
FIG. 10 is a graph for defining a relationship between a beam waist radius $\Omega1 = \Omega2$ at the time when $2\Omega1 = 2\Omega2$ is satisfied and a beam waist distance sum D1 + D2.
FIG. 11A is a graph used to describe on the coupling loss at the time when a distance Z between the lenses is Z = 60mm.
FIG. 11B is a graph used to describe on the coupling loss at the time when Z = 70mm.
FIG. 11C is a graph used to describe on the coupling loss at the time when Z = 80.89mm.
FIG. 12A is a graph corresponding to FIG. 11C at the time when the second lens is replaced with another lens with a different focal length.
FIG. 12B is a graph corresponding to FIG. 11C at the time when the second lens is replaced with the other lens with a different focal length.
FIG. 13 is a normalized graph in order to examine the beam waist distance sum D1 + D2 capable of suppressing the coupling loss to 0.15 dB or less.
FIG. 14 is a side view for illustrating only an obliquely polished multi-core optical fiber and a first lens of an FIFO device according to a modification example of the present invention.
FIG. 15 is a graph for defining a relationship between a distance d1 from a center of the multi-core optical fiber to the first lens and $\Omega1$ for each light beam from the core.
FIG. 16 is a graph for defining a relationship between $\Omega1$ values having two types of variations.
FIG. 17 is a graph used to describe on the beam waist distance sum D1 + D2 capable of suppressing the coupling loss to 0.15 dB or less.
FIG. 18 is a graph used to describe conditions satisfied by a combination of $\Omega1$ values having two types of variations in an FIFO device according to a second embodiment of the present invention.
FIG. 19 is a graph for defining a relationship between $\Omega1$ values having two types of variations.
FIG. 20 is a graph of a comparative example of an FIFO device according to a third embodiment of the present invention.
FIG. 21A is a graph used to describe on the coupling loss at the time when Z = 80 mm, and to describe conditions satisfied by a combination of Ω1 values having two types of variations.

FIG. 21B is a graph used to describe on the coupling loss at the time when Z = 79 mm.

FIG. 21C is a graph used to describe on the coupling loss at the time when Z = 78 mm.

Description of Embodiments

(First Embodiment)

An FIFO device 10 according to a first embodiment of the present invention is described with reference to figures. Hereinafter, "FIFO device" may also be simply referred to as "device."

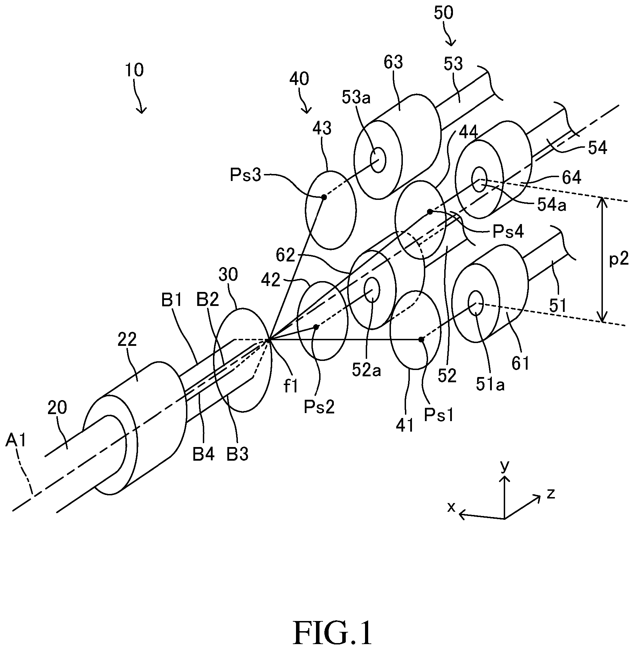

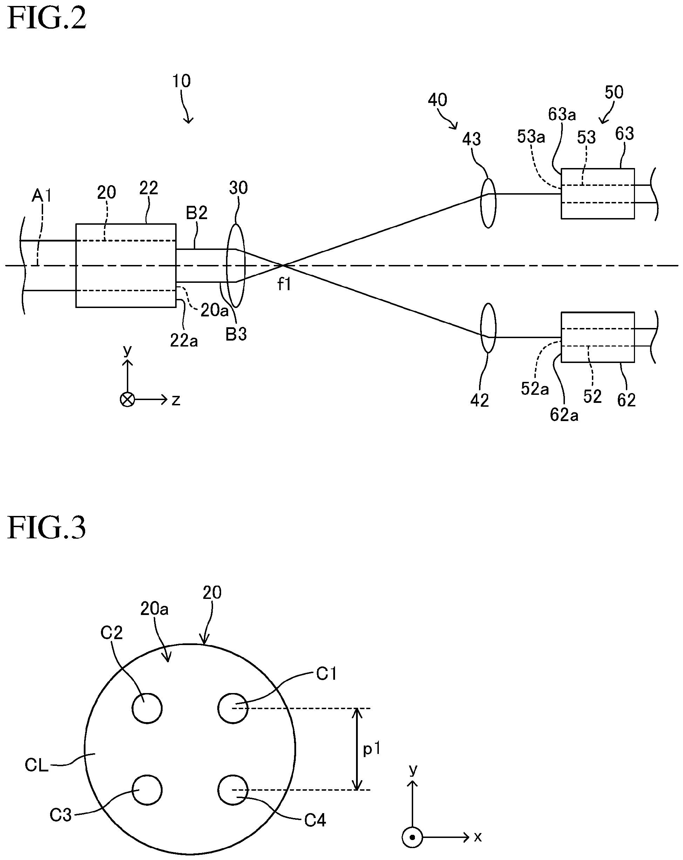

FIG. 1 is a perspective view of a device 10, and FIG. 2 is a side view of a device 310. As shown in FIG. 1 and FIG. 2, the device 10 includes a multi-core optical fiber 20, a first lens 30, a group of second lenses 40, and a group of single-core optical fibers 50. These members are arranged in the aforementioned order along an axis A1. An orthogonal coordinate system is set in the device 10. The z-axis extends parallel to the axis A1 so that a direction directed from the multi-core optical fiber 20 toward the first lens 30 corresponds to a positive direction. The y-axis is orthogonal to the z-axis and extends so that an upper direction of the drawing sheet corresponds to a positive direction. The x-axis is orthogonal to the z-axis and the y-axis. Hereinafter, the multi-core optical fiber and the single-core optical fiber are also referred to as "MCF" and "SCF," respectively. In this specification, in order to make the drawings easily visible, specific members (for example, the MCF 20 and a group of the SCF 50) are illustrated with their dimensions, angles of light beams, and the like being changed.

The MCF 20 has a columnar/cylindrical shape, and a center axis of at least an end portion of the MCF 20 in the +z-axis direction matches the axis A1. An end face 20a (see FIG. 2) of the MCF 20 is parallel to a plane (xy plane) orthogonal to the axis A1. FIG. 3 is a diagram of the end face 20a seen along the center axis of the MCF 20. As illustrated in FIG. 3, the MCF 20 includes four cores C1 to C4, and a common cladding CL surrounding those cores C1 to C4. The cores C1 to 4 are positioned at vertices of a square having a center of the end face 20a as a center, and extend along an axial direction. A distance (core pitch p1) between adjacent cores is 50 μm. The cores C1 to C4 and the cladding CL are both made of glass containing quartz as a main component. A refractive index of each of the cores C1 to C4 is larger than a refractive index of the cladding CL. The MCF 20 is an optical fiber through which a single-mode light beam propagates. The material of the cores C1 to C4 and the cladding CL is not limited to glass containing quartz as a main component, and the cores C1 to C4 and the cladding CL may be made of other materials. Further, in this specification, a column/cylinder includes one having a curved axis.

As illustrated in FIG. 1 and FIG. 2, an end portion of the MCF 20 in the +z-axis direction is inserted into and held by a ferrule 22 having a cylindrical shape. An end face 22a of the ferrule 22 is positioned on the same plane as the end face 20a of the MCF 20. The reason therefor is because, under a state in which the MCF 20 is inserted into the ferrule 22, the end face 20a of the MCF 20 is collectively polished together with the end face 22a of the ferrule 22. In FIG. 2, the MCF 20 inside of the ferrule 22 is indicated by the broken line, but illustration of the cores C1 to C4 is omitted.

Light beams propagated through the respective cores C1 to C4 of the MCF 20 are emitted from the end face 20a toward the first lens 30. That is, the MCF 20 functions as an emission member. In FIG. 1, only principal rays B1 to B4 of the light beams emitted from the respective cores C1 to C4 (see FIG. 3) are illustrated, and in FIG. 2, only principal rays B2 and B3 of the light beams emitted from the cores C2 and C3 are illustrated. The principal rays of the emission light beams emitted from the respective cores C1 to C4 are parallel to each other, but each emission light beam is divergent light which diverges as the light progresses (mentioned later). In the present embodiment, a light beam with a wavelength of 1.55 μm is used, but a value of a wavelength is not limited thereto.

The first lens 30 is a collimator lens having a focal length df1 of 1.3 mm, and in more detail, is an aspherical lens having a rotationally symmetric curved surface. The first lens 30 collimates (make parallel) a light beam diverging after being emitted from the respective cores C1 to C4. The optical axis of the first lens 30 is positioned on the center axis (i.e., the axis A1) of the MCF 20. The first lens 30 deflects the light beams which are emitted from the respective cores C1 to C4 and whose principal rays B1 to B4 are parallel to each other, and the light beams exit from the first lens 30. In other words, the first lens 30 collects the light beams emitted from the respective cores C1 to C4 to a focal point f1. That is, the first lens 30 is a lens arranged so as to face the multi-core optical fiber. It should be noted that curved surfaces of the first lens 30 may be rotationally asymmetric as long as they can emit the light beams emitted from the respective cores C1 to C4 so as to deflect the light beams. Additionally, the first lens 30 may be a spherical lens, a GRIN lens, or a lens with one flat surface.

The group of the second lenses 40 include the same number of second lenses 41 to 44 as the number of the cores of the MCF 20 (in this example, four) (see FIG. 1). The second lenses 41 to 44 are all collimator lenses each having a focal length df2 of 2.5 mm, and in more detail, aspherical lenses each having a rotationally symmetric curved surface. Hereinafter, the second lenses 41 to 44 are simply referred to as "lenses 41 to 44". An optical axis of each of the lenses 41 to 44 is parallel to the optical axis of the first lens 30. Principal points of the lenses 41 to 44 are positioned on the same plane, which is orthogonal to the axis A1. In FIG. 2, among the lenses 41 to 44, only the lenses 42 and 43 which the principal rays B2 and B3 enter are illustrated.

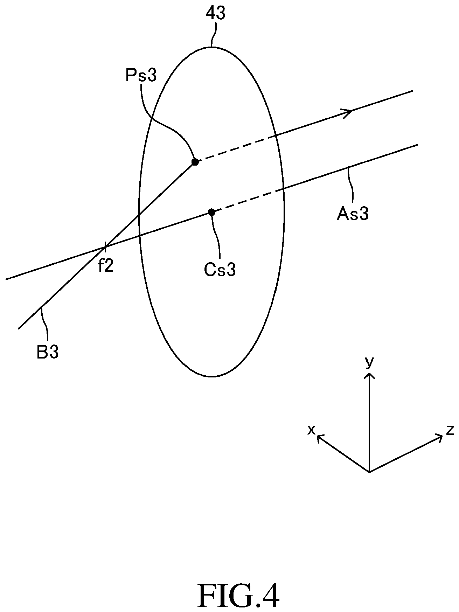

FIG. 4 is a diagram for illustrating a manner in which the principal ray B3 of the emission light beam from the core C3 passes through the corresponding lens 43. As shown in FIG. 1, FIG. 2, and FIG. 4, the light beam exiting from the first lens 30, which has been emitted from the core C3 of the MCF 20, passes through the focal point f1. The principal ray B3 of the light beam that has passed through the focal point f1 progresses to pass through the focal point f2 of the lens 43 (see FIG. 4) and enters the lens 43 at a predetermined incident angle (in this example, 1.6°) at a position Ps3 of the lens 43. The principal ray B3 that has entered the position Ps3 exits from the lens 43 as a ray parallel to an optical axis As3 of the lens 43 (see FIG. 4).

Similarly, as shown in FIG. 1, the principal rays B1, B2, and B4 of the light beams that have passed through the focal point f1 progress to pass through the focal points f2 (not shown) of the lenses 41, 42, and 44, respectively, and enter the lenses 41, 42, and 44 at predetermined incident angles (in this example, approximately 1.6°) at positions Ps1, Ps2, and Ps4, respectively. The principal rays B1, B2, and B4 that have entered the positions Ps1, Ps2, and Ps4 exit from the lenses 41, 42, and 44, respectively, as rays parallel to optical axes of the lenses 41, 42, and 44.

As shown in FIG. 1 and FIG. 2, the group of the second lenses 40 converge the light beams exiting from the first lens 30, which have been emitted from the respective cores C1 to C4 by the corresponding lenses 41 to 44, respectively (only the principal rays are illustrated in FIG. 1 and FIG. 2). Note that curved surfaces of each of the lenses 41 to 44 may be rotationally asymmetric as long as they can emit the light beam emitted from the corresponding respective cores C1 to C4 so as to deflect the light beam. Additionally, each lens 41 to 44 may be a spherical lens, a GRIN lens, or a lens with one flat surface.

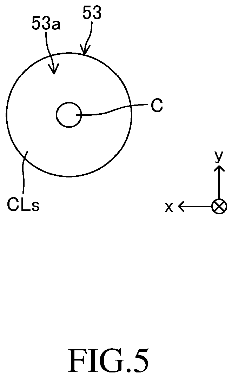

The group of the SCFs 50 include the same number of SCFs 51 to 54 as the number of the lenses 41 to 44 (in this example, four) (see FIG. 1). Each of the SCFs 51 to 54 is an optical fiber through which a single-mode light beam propagates. Since the SCFs 51 to 54 have the same configuration with each other, a configuration of the SCF 53 is described below. SCF 53 has a columnar/cylindrical shape, and a center axis of at least an end portion of the SCF 53 in the -z-axis direction is parallel to the optical axis As3 (refer to FIG. 4) of the corresponding lens 43. Additionally, the SCF 53 is positioned at a position apart from the optical axis of the first lens 30. An end face 53a of the SCF 53 is parallel to the xy plane. FIG. 5 is a diagram of the end face 53a viewed along the center axis of the SCF 53. As shown in FIG. 5, the SCF 53 includes one core C extending along the center axis thereof, and a cladding CLs surrounding the core C. Each core C of the SCFs 51 to 54 are positioned at vertices of a square having the axis A1 as a center. In the present embodiment, the device 10 is designed such that a pitch p2 between adjacent cores is approximately 3.1mm. The core C and the cladding CLs are both made of glass containing quartz as a main component. A refractive index of the core C is larger than a refractive index of the cladding CLs. The material of the core C and the cladding CLs is not limited to glass containing quartz as a main component, and the core C and the cladding CLs may be made of other materials.

As illustrated in FIG. 1 and FIG. 2, an end portion of the SCF 53 in the -z-axis direction is inserted into and held by a ferrule 63 having a cylindrical shape. The end face 53a of the SCF 53 is collectively polished together with an end face 63a of the ferrule 63 under a state in which the SCF 53 is inserted into the ferrule 63. Accordingly, the end face 53a of the SCF 53 and the end face 63a of the ferrule 63 are positioned on the same plane (xy plane). In FIG. 2, the SCF 53 inside of the ferrule 63 is indicated by the broken line.

The end face 53a of the SCF 53 is arranged at a position at which the light beam exiting from the lens 43, which has been emitted from the core C3 converges on the core C (more strictly, on a center of the core C). That is, the SCF 53 is arranged so that the principal ray B3 enters the center of the core C.

Similarly, the SCFs 51, 52, and 54 are positioned at positions each apart from the optical axis of the first lens 30, and their end faces 51a, 52a, and 54a (refer to FIG. 1) are arranged at positions at which the light beams exiting from the lenses 41, 42, and 44, which have been emitted from the cores C1, C2, and C4 converge on the cores C (more strictly, on centers of the cores C), respectively. That is, the SCFs 51, 52, and 54 are arranged so that the principal rays B1, B2, and B4 enter the centers of the cores C, respectively. As a result, the emission light beams from the cores C1, C2, and C4 enter the cores C of the SCFs 51, 52, and 54 with low loss.

In this way, the first lens 30 and the group of the second lenses 40 optically couple the MCF 20 and the group of the SCFs 50. Hereinafter, a progress direction of the aforementioned light beams may also be referred to as a "first progress direction." When a light beam progresses in the first progress direction, the device 10 functions as a "Fan-out (FO) device." Here, since optical path is reversible, a light beam may propagate in an opposite direction to the first progress direction in the device 10. That is, the device 10 can be also configured in such a manner that light beams propagate in such a progress direction that the light beams are emitted from the respective cores C of the SCF 51 to 54, pass through the lenses 41 to 44 and the first lens 30, and converge on the respective cores C1 to C4 of the MCF 20. Hereinafter, this progress direction (direction opposite to the first progress direction) may be also referred to as a "second progress direction". When a light beam progresses in the second progress direction, the device 10 functions as a "Fan-in (FI) device."

Next, a positional relationship of each member 20, 30, 40, and 50 included in the device 10 and optical coupling loss of light beam is described. In this specification, propagation of the light beam is assumed to follow a Gaussian beam model. Gaussian beam is light beam in which light intensity distribution on a cross-section orthogonal to a progress direction (propagation direction) of the light beam follows a Gaussian function. Note that optical coupling loss is synonymous with insertion loss and hereinafter, may be also simply referred to as "coupling loss."

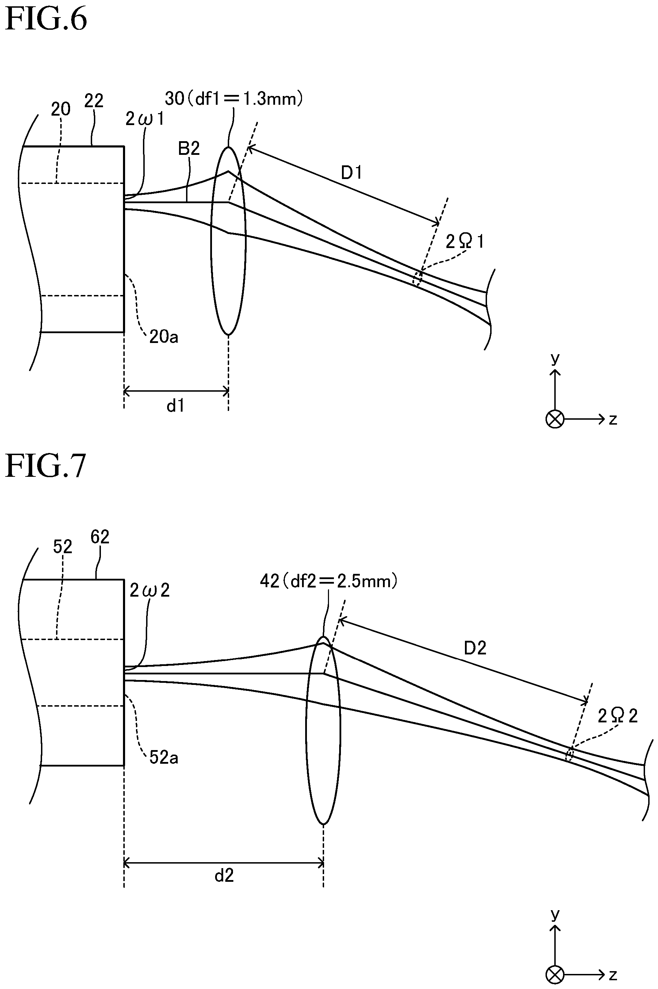

Fig. 6 is a diagram for selectively illustrating only light beam exited from the core C2 of the MCF 20 and deflected by the first lens 30 (i.e., light beam traveling in the first progress direction). B2 represents a principal ray of this light beam. As described above, the light beam emitted from the core C2 is collimated by the first lens 30, but strictly speaking, the light beam converges at a first beam waist position which is a position separated away from the first lens 30 by a predetermined distance, and diverges from the first beam waist position toward the lens 42. A diameter of the light beam (hereinafter also referred to as a "beam diameter") is minimized at the first beam waist position. A beam diameter and a beam radius at the first beam waist position are referred to as a "first beam waist diameter $2\Omega1$" and a "first beam waist radius $\Omega1$," respectively.

A distance from the first lens 30 to the first beam waist position in the progress direction of the principal ray B2 (in other words, a length of the principal ray B2 from the first lens 30 to the first beam waist position) is referred to as a "first beam waist distance D1." When defining an extending direction of the optical axis of the first lens 30 as an "optical axis direction," the first beam waist distance D1 and the first beam waist diameter $2\Omega1$ depend on a beam diameter $2\omega1$ at the end face 20a of the MCF 20, the focal length df1 (= 1.3 mm) of the first lens 30, and a distance d1 between the end face 20a of the MCF 20 and the first lens 30 in the optical axis direction. When neither the MCF 20 nor the first lens 30 is changed, the first beam waist distance D1 and the first beam waist diameter $2\Omega1$ are substantially dependent on the distance d1 (as described later). It should be noted that the beam diameter $2\omega1$ is equal to a mode field diameter of the MCF 20, which is 8 $\mu$m in the present embodiment. The above description also applies to light beams emitted from the cores C1, C3, and C4.

Fig. 7 is a diagram for illustrating light beam emitted from the core C of the SCF 52 and deflected by the lens 42 (i.e., light beam traveling in the second progress direction). The SCF 52 in Fig. 7 is the same component used in the device 10, but it is illustrated as inverted along the x-axis, the y-axis, and the z-axis to explain a case where the light beam travels in the second progress direction. The light beam emitted from the core C is collimated by the lens 42, but strictly speaking, the light beam converges at a second beam waist position which is a position separated away from the lens 42 by a predetermined distance, and diverges from the second beam waist position toward the first lens 30. A beam diameter of the light beam is minimized at the second beam waist position. A beam diameter and a beam radius at the second beam waist position are referred to as a "second beam waist diameter $2\Omega2$" and a "second beam waist radius $\Omega2$," respectively.

A distance from the lens 42 to the second beam waist position in the progress direction of the principal ray of the light beam exited from the lens 42 (in other words, a length of this principal ray from the lens 42 to the second beam waist position) is referred to as a "second beam waist distance D2." The second beam waist distance D2 and the second beam waist diameter $2\Omega2$ depend on a beam diameter $2\omega2$ at the end face 52a of the SCF 52, the focal length df2 (= 2.5 mm) of the lens 42, and a distance d2 between the end face 52a of the SCF 52 and the lens 42 in the optical axis direction. When neither the SCF 52 nor the lens 42 is changed, the second beam waist distance D2 and the second beam waist diameter $2\Omega2$ are substantially dependent on the distance d2. It should be noted that the beam diameter $2\omega2$ is equal to a mode field diameter of the SCF 52, which is 10.4 $\mu$m in the present embodiment. The above description also applies to light beams emitted from the SCFs 51, 53, and 54.

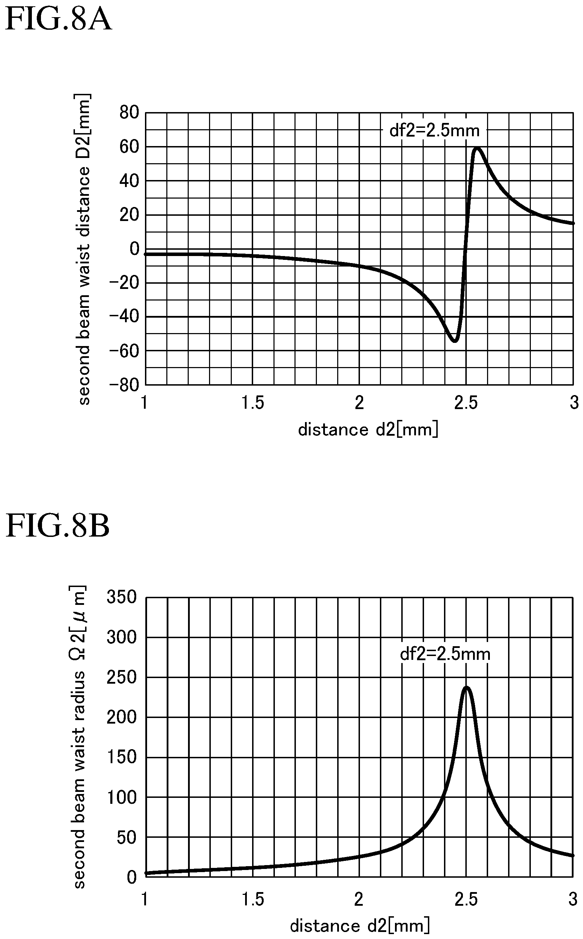

Fig. 8A is a graph for defining a relationship between the distance d2 and the second beam waist distance D2 in the configuration shown in Fig. 7, and Fig. 8B is a graph for defining a relationship between the distance d2 and the second beam waist radius $\Omega2$ in the configuration shown in Fig. 7. According to Fig. 8A, the second beam waist distance D2 is 2.5 mm when the distance d2 is equal to the focal length df2 (= 2.5 mm) of the lens 42, and becomes maximal when the distance d2 is slightly greater than the focal length df2. According to Fig. 8B, the second beam waist radius $\Omega2$ is maximal when the distance d2 is equal to the focal length df2 and decreases as the distance d2 increases. The above trend also applies to a relationship between the distance d1 and the first beam waist distance D1/the first beam waist radius $\Omega1$ in the configuration shown in Fig. 6. In the present embodiment, the MCF 20 is arranged with respect to the first lens 30 so that the distance d1 satisfies d1 > df1, and the group of the SCFs are arranged with respect to the group of the second lenses 40 so that the distance d2 satisfies d2 > df2.

In Fig. 7, an example is illustrated where the light beam emitted from the core C of the SCF 52 travels in the second progress direction via the lens 42, but as described above, optical path is reversible. Therefore, a path of light beam in a case where the light beam emitted from the core C2 of the MCF 20 travels in the first progress direction toward the core C of the SCF 52 via the first lens 30 and the lens 42 coincides with a path shown in Fig. 7. Consequently, parameters $2\Omega2$ ($\Omega2$), D2, $2\omega2$. and d2 can also be used when light beam travels in the first progress direction.

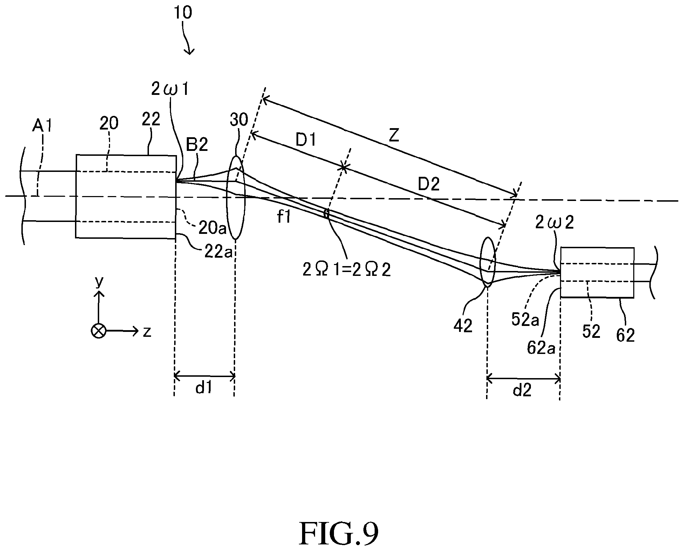

Fig. 9 is a diagram for illustrating a positional relationship of each component 20, 30, 40, and 50 in a case when the coupling loss of the device 10 is zero. Fig. 9 selectively illustrates only light beam emitted from the core C2 of the MCF 20 and the corresponding lens 42 and the SCF 52. As shown in Fig. 9, the theoretical coupling loss becomes zero when following two conditions are met.

(Condition 1) The first beam waist diameter $2\Omega1$ is equal to the second beam waist diameter $2\Omega2$ ($2\Omega1 = 2\Omega2$).

(Condition 2) An inter-lens distance Z, which is a distance between the first lens 30 and each corresponding lens 41 to 44 in a progress direction of principal rays of light beams exited from the first lens 30, is equal to a sum of the first beam waist distance D1 and the second beam waist distance D2 ($Z = D1 + D2$).

In other words, when the beam diameter $2\omega2$ of incident light beams at the end faces 51a to 54a of the SCF 51 to 54 matches the mode field diameter of the SCF 51 to 54, the coupling loss becomes zero. When the beam diameter $2\omega2$ does not match this mode field diameter, some coupling loss occurs. For example, in an example of Fig. 9, when the lens 42 is shifted in the +z-axis direction, the beam diameter $2\omega2$ no longer matches the mode field diameter of the SCF 51 to 54, leading to the coupling loss. Hereinafter, when Condition 1 is satisfied, the first beam waist diameter $2\Omega1$ (or radius $\Omega1$) and the second beam waist diameter $2\Omega2$ (or radius $\Omega2$) may be referred to as "beam waist diameter $2\Omega1 = 2\Omega2$" or "beam waist radius $\Omega1 = \Omega2$." Moreover, a sum of the first beam waist distance D1 and the second beam waist distance D2 at the time when Condition 1 is satisfied may be also referred to as a "beam waist distance sum D1 + D2."

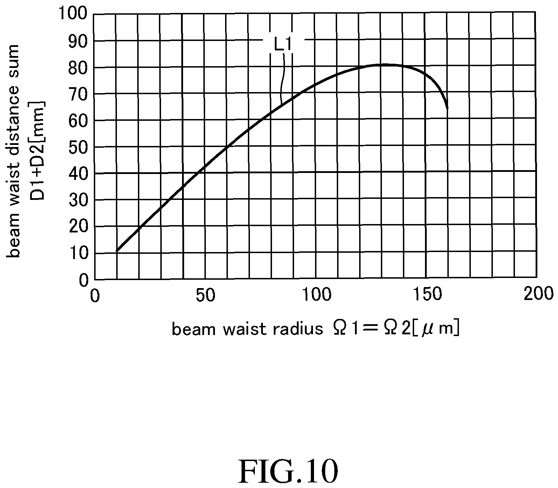

Fig. 10 is a graph for defining a relationship between the beam waist radius $\Omega1 = \Omega2$ and the beam waist distance sum D1 + D2 at the time when Condition 1 is met. According to a curve L1, D1 + D2 increases as $\Omega1 = \Omega2$ increases, and then starts to decrease via a maximum value. According to Fig. 10, it can be understood that by matching the inter-lens distance Z to the beam waist distance sum D1 + D2 on the curve L1, the coupling loss can be reduced to zero.

Meanwhile, in manufacturing process of the device 10, errors may occur in the distances d1, d2, and the like. If an error occurs in the distance d1, the first beam waist diameter $2\Omega1$ and the first beam waist distance D1 change. Similarly, if an error occurs in the distance d2, the second beam waist diameter $2\Omega2$ and the second beam waist distance D2 change. In this case, Conditions 1 and 2 no longer be satisfied, and it is likely that the coupling loss increases. Therefore, there is a need to develop a device in which coupling loss is less likely to increase even when manufacturing errors (variations) occur in the distance d1 and/or the distance d2 (in other words, a device in which coupling loss is less likely to fluctuate even when the first and the second beam waist diameters $2\Omega1$ and $2\Omega2$ change).

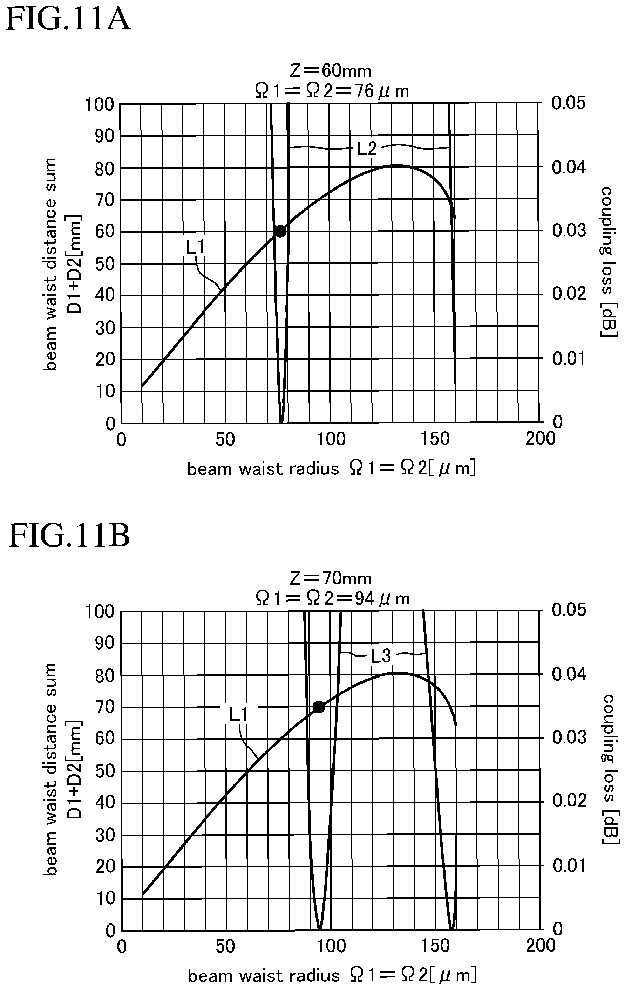

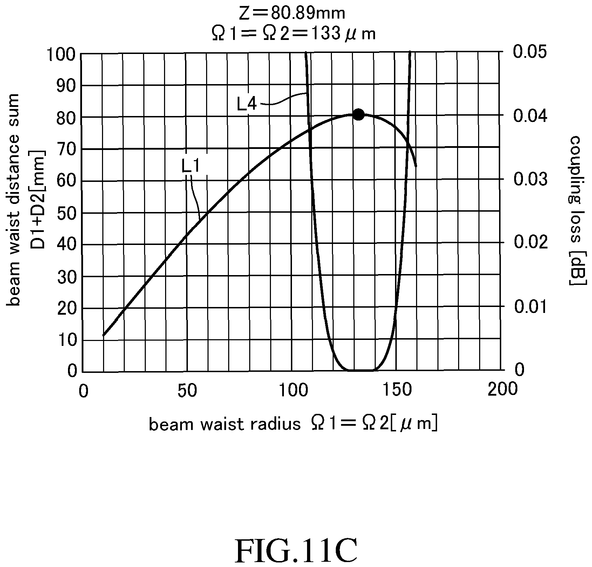

To investigate this point, the inventors of the present application conducted a simulation to examine behavior of the coupling loss by changing the inter-lens distance Z. Figs. 11A to 11C are graphs for defining a relationship between the beam waist radius $\Omega1 = \Omega2$ and the beam waist distance sum D1 + D2 (see curve L1), as well as a relationship between the beam waist radius $\Omega1 = \Omega2$ and the coupling loss (see curves L2, L3, and L4). In Fig. 11A, the inter-lens distance Z is set to 60 mm, in Fig. 11B, the inter-lens distance Z is set to 70 mm, and in Fig. 11C, the inter-lens distance Z is set to 80.89 mm.

In an example of Fig. 11A, the beam waist distance sum D1 + D2 that satisfies Condition 2 is 60 mm, and the beam waist radius $\Omega1 = \Omega2$ at this time was 76 $\mu m$. In an example of Fig. 11B, the beam waist distance sum D1 + D2 that satisfies Condition 2 is 70 mm, and the beam waist radius $\Omega1 = \Omega2$ at this time was 94 $\mu m$. In an example of Fig. 11C, the beam waist distance sum D1 + D2 that satisfies Condition 2 is 80.89 mm, and the beam waist radius $\Omega1 = \Omega2$ at this time was 133 $\mu m$. According to Figs. 11A to 11C, it can be understood that as the inter-lens distance Z increases, the coupling loss becomes less susceptible to fluctuations even when the beam waist radius $\Omega1 = \Omega2$ changes. Therefore, when manufacturing the device 10, it is desirable to control Z so that the inter-lens distance Z is substantially equal to a maximum value of the beam waist distance sum. Hereinafter, a maximum value of D1 + D2 that satisfies $Z = D1 + D2$ may be also referred to as a "distance sum maximum value D1 + D2_max." In the present embodiment, the distance sum maximum value D1 + D2_max is 80.89 mm.

By setting the inter-lens distance Z to the distance sum maximum value D1 + D2_max, it is possible to realize a device in which coupling loss is less likely to increase even when manufacturing errors occur in the distance d1 and/or the distance d2. Here, a minimum value of the coupling loss for the current FIFO device (strictly, an FI device or an FO device) is 0.15dB. Therefore, the inventors of the present application examined, based on simulations, a range of the beam waist distance sum D1 + D2 that can suppress the coupling loss to 0.15dB or less. It should be noted that the coupling loss here means a coupling loss (insertion loss) for each core C1 to C4 (i.e., the cores C of the corresponding SCFs 51 to 54). Thus, an examination was conducted in order to suppress the maximum value of the coupling loss for each core C1 to C4 to 0.15dB or less.

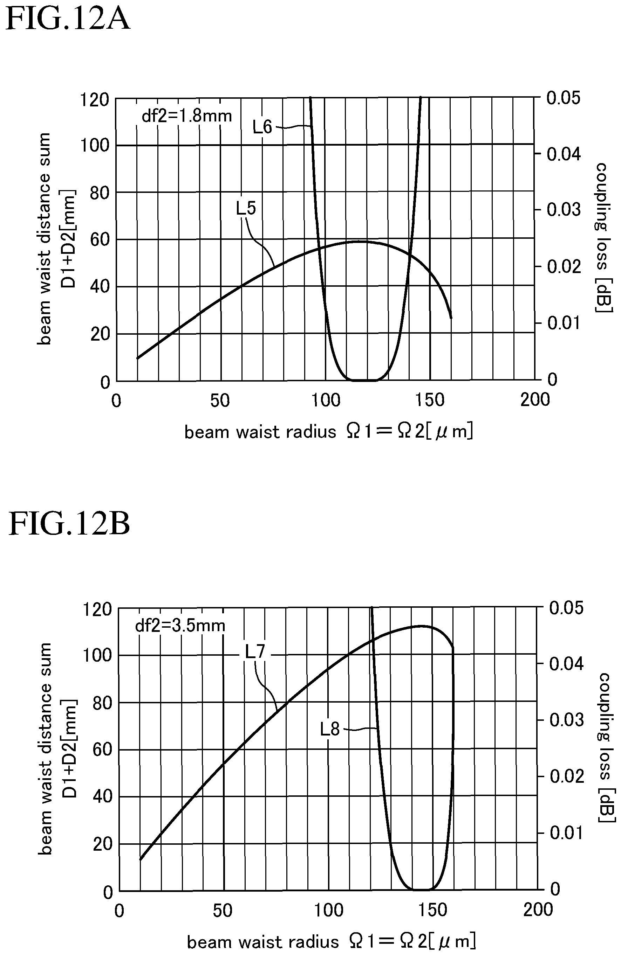

Fig. 12A is a graph corresponding to Fig. 11C (df2 = 2.5mm) in a case when the lenses 41 to 44 are replaced with lenses each having a focal length df2 = 1.8 mm. A curve L5 shows a relationship between $\Omega1 = \Omega2$ and D1 + D2, and a curve L6 shows a relationship between $\Omega1 = \Omega2$ and the coupling loss when the inter-lens distance Z is the distance sum maximum value D1 + D2_max. Fig. 12B is a graph corresponding to Fig.

11C in a case when the lenses 41 to 44 are replaced with lenses each having a focal length df2 = 3.5mm. A curve L7 shows a relationship between $\Omega 1 = \Omega 2$ and D1 + D2, and a curve L8 shows a relationship between $\Omega 1 = \Omega 2$ and the coupling loss in a case when the inter-lens distance Z is the distance sum maximum value D1 + D2_max. According to Figs. 12A, 11C, and 12B, the distance sum maximum value D1 + D2_max increases as the focal length df2 increases. On the other hand, as the focal length df2 decreases, the coupling loss becomes less susceptible to fluctuations even when the beam waist radius $\Omega 1 = \Omega 2$ changes.

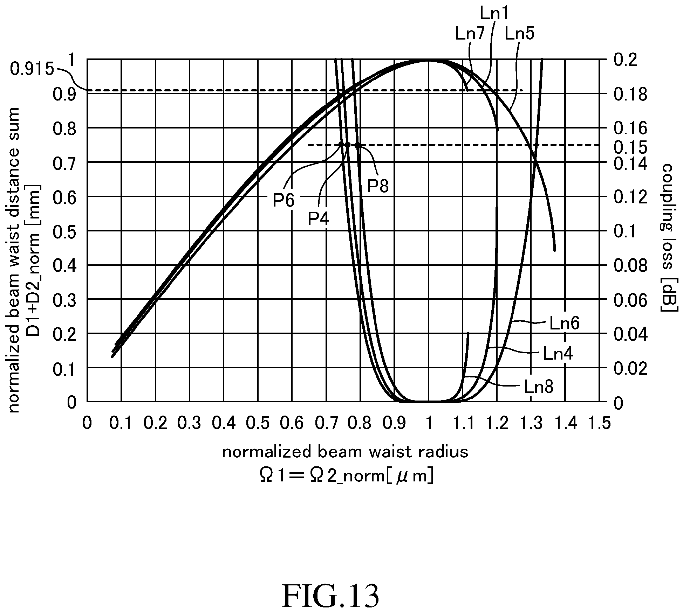

Fig. 13 is a graph for defining a relationship between a normalized beam waist radius $\Omega 1 = \Omega 2\_norm$ and a normalized beam waist distance sum D1 + D2_norm, as well as a relationship between the normalized beam waist radius $\Omega 1 = \Omega 2\_norm$ and the coupling loss. Curves Ln5, Ln1, and Ln7 correspond to normalized curves of curve L5 (see Fig. 12A), curve L1 (see Fig. 11C), and curve L7 (see Fig. 12B), respectively. Curves Ln6, Ln4, and Ln8 correspond to normalized curves of curve L6 (see Fig. 12A), curve L4 (see Fig. 11C), and curve L8 (see Fig. 12B), respectively. Points P6, P4, and P8 are intersections of a straight line indicating the coupling loss = 0.15dB and curves Ln6, Ln4, and Ln8, respectively. Note that there is another intersection for each, but it is not considered as it does not affect the investigation.

Values of the normalized beam waist radius $\Omega 1 = \Omega 2\_norm$ were 0.752 at point P6, 0.759 at point P4, and 0.792 at point P8. The D1 + D2_norm of curve Ln5 when $\Omega 1 = \Omega 2\_norm = 0.752$ was 0.906, the D1 + D2_norm of curve Ln1 when $\Omega 1 = \Omega 2\_norm = 0.759$ was 0.905, and the D1 + D2_norm of curve Ln7 when $\Omega 1 = \Omega 2\_norm = 0.792$ was 0.913. This means that when the group of the second lenses uses lenses with a focal length df2 of 3.5mm or less in a case when the inter-lens distance Z is set to the distance sum maximum value D1 + D2_max, if D1 + D2_norm is 0.913 or greater, the coupling loss can be suppressed to 0.15dB or less. Based on this simulation, the inventors of the present application obtained findings that when the inter-lens distance Z is substantially equal to the distance sum maximum value D1 + D2_max, if each member 20, 30, 40, and 50 of the device 10 is arranged so that the beam waist distance sum D1 + D2 is set to 91.5% or more of the distance sum maximum value D1 + D2_max, the coupling loss can be suppressed to 0.15dB or less.

The device 10 is designed based on the findings obtained in this manner. According to this configuration, even if manufacturing errors occur in the distance d1 and/or the distance d2 in a case when Z $\fallingdotseq$ D1 + D2_max is satisfied, the coupling loss can be suppressed to 0.15 dB or less as long as the beam waist distance sum D1 + D2 is 91.5% or more of the distance sum maximum value D1 + D2_max. Additionally, the behavior of the coupling loss at the time when the beam waist diameter $2\Omega 1 = 2\Omega 2$ changes becomes more gradual as Z increases (see FIG.s 11A to 11C). Therefore, by setting Z to be substantially equal to D1 + D2_max, it is possible to realize a device 10 that is robust against changes in the beam waist diameter $2\Omega 1 = 2\Omega 2$, compared to configurations where Z is significantly shorter than D1 + D2_max (see FIG.s 11A and 11B).

In particular, in the present embodiment, when the focal length df2 = 2.5 mm, the inter-lens distance Z is 80.89 mm and the pitch p2 (see FIG. 1) of the SCFs 51 to 54 is approximately 3.1 mm. The pitch p2 is a primary parameter that determines an external shape of the device 10, and it is desirable to downsize the device 10 by reducing the pitch p2. On the other hand, if the pitch p2 is reduced too much, problems such as interference between the ferrules 61 to 64 (or the lenses 41 to 44) and the like may occur. Therefore, generally, a target minimum value of the pitch p2 is set to about 3 mm. The pitch p2 depends on the focal lengths df1, df2, and the inter-lens distance Z. According to the present embodiment, the pitch p2 at df1 = 1.3 mm, df2 = 2.5 mm, and Z = 80.89 mm became a value substantially equal to the target minimum value. As a result, in addition to an effect that the coupling loss is less likely to fluctuate due to manufacturing errors, an effect that the device 10 can be downsized (in a radial direction) can be also obtained.

Note that the number of the cores of the MCF is not limited to four, and for example, may be five or seven. When the number of the cores of the MCF is five, the cores can be arranged at vertices and a center of a square. When the number of the cores of the MCF is seven, the cores can be arranged at vertices and a center of a regular hexagon. This is also applicable to a modification example, a second embodiment, and a third embodiment described later.

(Modification Example)

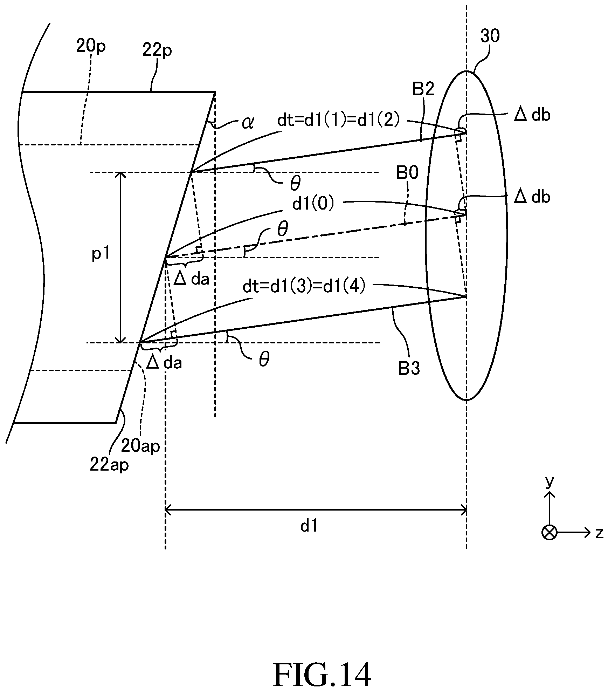

Next, the FIFO device according to a modification example of the present invention is described. FIG. 14 illustrate only an MCF 20p and the first lens 30 of the FIFO device. This FIFO device is different from the device 10 in that the MCF 20 is replaced with the MCF 20p. As shown in FIG. 14, an end face 20ap of the MCF 20p is obliquely polished in a predetermined inclination direction with a predetermined polishing angle $\alpha$ (in this example, 8°) with respect to a surface (xy plane) orthogonal to a center axis of the MCF 20p. More specifically, an oblique polishing direction of the MCF 20p is the + y-axis direction. Here, the oblique polishing direction is a direction obtained when a direction directed from, among both ends of a major axis of the end face 20ap with an elliptical shape by the oblique polishing, one end (distal end) which is more separated away from the first lens 30 toward the other end (proximal end) which is more proximal to the first lens 30 is viewed along the center axis of the MCF 20p.

The end face 20ap of the MCF 20p is collectively polished together with an end face 22ap of a ferrule 22p.

By obliquely polishing the MCF 20p, the reflected return light caused by the reflected light at the end face 20ap of the MCF 20p is reduced. The core number and core arrangement of the MCF 20p are the same as those of the MCF 20.

When the MCF 20p is obliquely polished in the +y-axis direction, principal rays of light beams (in this modification example, only principal rays B2 and B3 are illustrated) from respective cores C1 to C4 (not shown) emitted from the end face 20ap thereof incline, within a yz-plane, by a predetermined angle θ with respect to the axis. When defining a distance dt between each core C1 to C4 and the first lens 30 in the progress direction of the principal ray (in other words, a length of each of the principal rays B1 to B4 between each core C1 to C4 and the first lens 30) as d1(1), d1(2), d1(3), and d1(4) respectively, a relationship d1(1) = d1(2) < d1(3) = d1(4) holds among these distances. That is, there are two types of variations (d1(1) = d1(2) or d1(3) = d1(4)) in the distance dt. Note that the MCF 20p is shifted in the -y-axis direction by a predetermined distance with respect to the optical axis (not shown) of the first lens 30. This ensures that light beam angles of the principal rays B1 to B4 of the light beams from the respective cores C1 to C4 exited from the first lens 30 are equal to each other.

A distance in the optical axis direction between a center of the end face 20ap of the MCF 20p and the first lens 30 is defined as a distance d1. In this case, a length d1(0) of a virtual line B0 extending from the center of the end face 20ap to the first lens 30 along the progress direction of the principal ray is expressed as d1(0) = d1/cosθ. Although the principal rays B2 and B3 and the virtual line B0 are not on the same plane, they all exist on the yz-plane, so they can be regarded as being on the same plane in a side view of the MCF 20p. Therefore, distances d1(1) to d1(4) can be expressed as follows:

$$d1(1) = d1(2) = d1(0) - \Delta da + \Delta db$$

$$d1(3) = d1(4) = d1(0) + \Delta da - \Delta db$$

Here, Δda is a distance in the progress direction of the principal ray from, for example, "the core C3" to "a foot of a perpendicular dropped from the center of the end face 20ap to the principal ray B3" in the side view of the MCF 20p, and it can be expressed as Δda = p1sin(α +θ)/(2cosα). Δdb is a distance in the progress direction of the principal ray from, for example, "an intersection of the virtual line B0 and the first lens 30" to "a foot of a perpendicular dropped from an intersection of the principal ray B3 and the first lens 30 to the virtual line B0" in the side view of the MCF 20p, and it can be expressed as Δdb = (p1cos(α+θ)tanθ)/(2cosα).

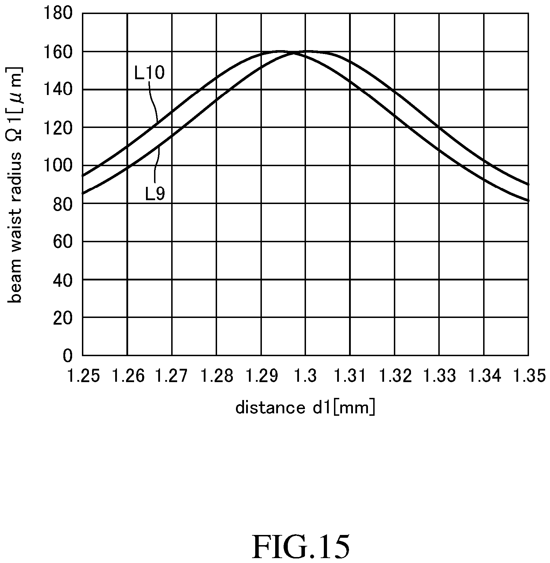

FIG. 15 is a graph for defining a relationship between the distance d1 and the first beam waist radius Ω1 for each of the light beams from the cores C1 to C4 in the configuration of FIG. 14. Curve L9 shows a behavior of the light beams from the cores C1 and C2, while curve L10 shows a behavior of the light beams from the cores C3 and C4. As shown in FIG. 15, a value of the first beam waist radius Ω1 corresponding to any distance d1 differs between the light beams from the cores C1 and C2 (curve L9) and the light beams from the cores C3 and C4 (curve L10). In other words, there are two types of variations in the first beam waist radius Ω1 due to the occurrence of two types of variations in the distance dt (although not shown, there are also two types of variations in the first beam waist distance D1). In this modification example, the MCF 20p is arranged with respect to the first lens 30 so that the length d1(0) (= d1/cosθ) satisfies d1(0) > df1 (= 1.3 mm), and the group of the SCFs 50 is arranged with respect to the group of the second lenses 40 so that the distance d2 satisfies d2 > df2 (the same applies to the second and the third embodiments). Therefore, a region where d1 ≤ 1.3cosθ mm is not considered in the graph of FIG. 15. According to FIG. 15, the Ω1 of the light beams from the cores C1 and C2 is larger than the Ω1 of the light beams from the cores C3 and C4. This is because the distance d1(1) = d1(2) is shorter than the distance d1(3) = d1(4).

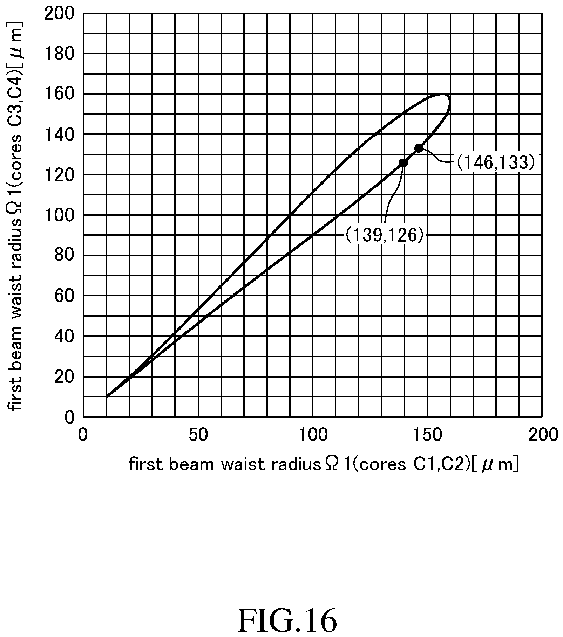

FIG. 16 is a graph for defining a relationship between the first beam waist radius Ω1 of the light beams from the cores C1 and C2 (hereinafter, also referred to as "Ω1(C1,C2)") and the first beam waist radius Ω1 of the light beams from the cores C3 and C4 (hereinafter, referred to as "Ω1(C3,C4)") based on curves L9 and L10 in FIG. 15. According to FIG. 16, it can be understood that, among the first beam waist radii Ω1 having two types of variations, when one of the radii Ω1 is determined, the other radii Ω1 is uniquely determined.

In this modification example, the SCFs 51 to 54 are arranged with respect to the corresponding lenses 41 to 44 so that the second beam waist diameter 2Ω2 matches the corresponding first beam waist diameter 2Ω1 (the same applies to the second and the third embodiments). Therefore, Condition 1 (see the first embodiment) is satisfied. For example, when Ω1(C1,C2) = 146 μm and Ω1(C3,C4) = 133 μm, the distance d2 (see FIG. 9) between the SCFs 51 and 52 and the lenses 41 and 42 is adjusted so that the second beam waist radius Ω2 corresponding to the SCFs 51 and 52 becomes Ω2 = 146 μm, and the distance d2 between the SCFs 53 and 54 and the lenses 43 and 44 is adjusted so that the second beam waist radius Ω2 corresponding to the SCFs 53 and 54 becomes Ω2 = 133 μm. That is, there occur two types of variations in the second beam waist radius Ω2 as well due to the occurrence of two types of variations in the distance dt.

As described above, when two types of variations occur in the beam waist radius Ω1 = Ω2, two types of variations also occur in the beam waist distance sum D1 + D2, resulting in two types of variations also in the coupling loss. To achieve low coupling loss, it is desirable to suppress both coupling losses to 0.15 dB or less. The inventors of the present application obtained a finding that when the inter-lens distance Z is substantially equal to the distance sum maximum value D1 + D2_max, both coupling losses can be suppressed to 0.15 dB or less as long as two types of the beam waist distance sum D1 + D2 are both 91.5% or more of the distance sum maximum value D1 + D2_max.

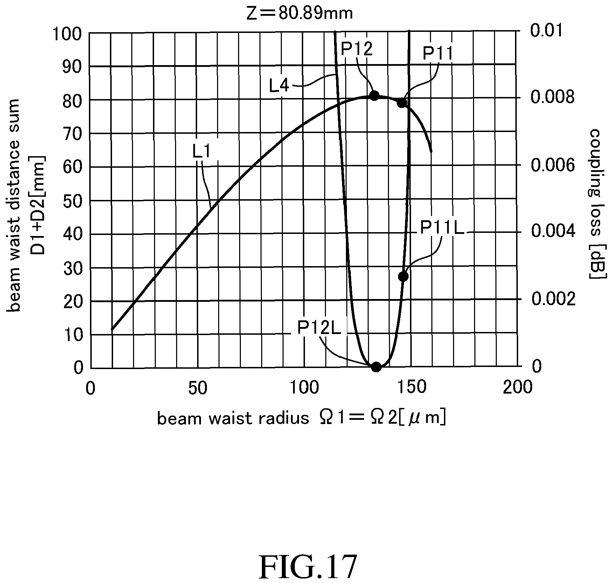

FIG. 17 is a graph in which points P11, P12, P11L, and P12L are plotted on the graph of FIG. 11C with a scale of the coupling loss changed (i.e., Z = D1 + D2_max = 80.89 mm). Point P11 indicates the beam waist distance sum D1 + D2 when $\Omega1(C1, C2)$ = 146 $\mu$m, and its value is 91.5% or more of the distance sum maximum value D1 + D2_max. Point P11L indicates the coupling loss when $\Omega1(C1, C2)$ = 146 $\mu$m, and its value is $2.7 \times 10^{-3}$ dB ($\leq 0.15$ dB). On the other hand, point P12 indicates the beam waist distance sum D1 + D2 when $\Omega1(C3, C4)$ = 133 $\mu$m, and its value is equal to the distance sum maximum value D1 + D2_max. Point P12L indicates the coupling loss when $\Omega1(C3, C4)$ = 133 $\mu$m, and its value is zero ($\leq 0.15$ dB).

According to an example of FIG. 17, it is confirmed that when Z = D1 + D2_max, the coupling losses both can be suppressed to 0.15 dB or less by adjusting the distances d1 and d2 so that two types of the beam waist distance sum D1 + D2 become both 91.5% or more of the distance sum maximum value D1 + D2_max. As described above, according to the configuration of the modification example, even when two types of variations occur in the beam waist radius $\Omega1 = \Omega2$ due to the oblique polishing of the MCF 20p, the coupling losses both can be suppressed to 0.15 dB or less by setting Z to be substantially equal to D1 + D2_max and by adjusting the distances d1 and d2 so that D1 + D2 become 91.5% or more of D1 + D2_max. Note that as long as D1 + D2 is 91.5% or more of D1 + D2_max, a combination of $\Omega1(C1, C2)$ and $\Omega1(C3, C4)$ is not limited to the above-mentioned combination, and other combinations may be adopted based on FIG. 16. By setting Z to be substantially equal to D1 + D2_max, a device in which the coupling loss is robust against changes in the beam waist diameter $2\Omega1 = 2\Omega2$ can be realized.

Note that the above findings can also be applied to cases where n types of variations occur in the distance dt due to an increase in the number of cores or changes in core arrangement. That is, when the inter-lens distance Z is substantially equal to the distance sum maximum value D1 + D2_max, the coupling losses can be all suppressed to 0.15 dB or less, as long as the n types of beam waist distance sum D1 + D2 are all 91.5% or more of the distance sum maximum value D1 + D2_max.

(Second Embodiment)

Next, a description of an FIFO device according to a second embodiment of the present invention is given. The FIFO device of this embodiment is identical to the FIFO device of the modification example. However, a method of selecting the combination of two types of beam waist radii $\Omega1 = \Omega2$ is different from that of the modification example. Hereinafter, a beam waist radius at the time when the beam waist distance sum D1 + D2 is the distance sum maximum value D1 + D2_max is defined as a "beam-waist-radius-at-maximum-distance $\Omega$_Dmax."

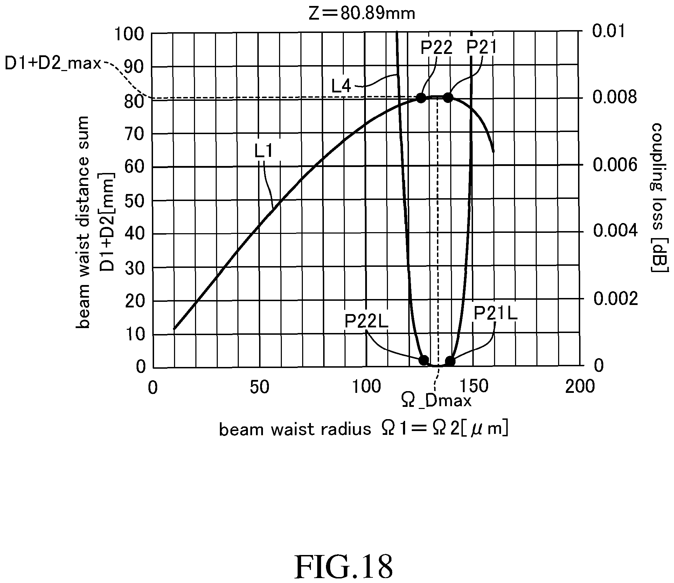

In this embodiment, it is characterized that when Z = D1 + D2_max, the distances d1 and d2 are adjusted such that $\Omega1(C1, C2)$ and $\Omega1(C3, C4)$ satisfy $\Omega1(C3, C4) < \Omega\_Dmax < \Omega1(C1, C2)$. FIG. 18 is a graph in which points P21, P22, P21L, and P22L are plotted instead of points P11, P12, P11L, and P12L on the graph of FIG. 17 (i.e., Z = D1 + D2_max = 80.89 mm). Point P21 indicates the beam waist distance sum D1 + D2 when $\Omega1$ (C1, C2) = 139 $\mu$m (see FIG. 16). Point P21L indicates the coupling loss when $\Omega1$ (C1, C2) = 139 $\mu$m, and its value is $1.2 \times 10^{-4}$ dB. On the other hand, point P22 indicates the beam waist distance sum D1 + D2 when $\Omega1(C3, C4)$ = 126 $\mu$m (see FIG. 16). Point P22L indicates the coupling loss when $\Omega1(C3, C4)$ = 126 $\mu$m, and its value is $2.0 \times 10^{-4}$ dB.

According to an example of FIG. 18, it is confirmed that when Z = D1 + D2_max, the coupling losses can be further reduced compared to the example of FIG. 17 by adjusting the distances d1 and d2 such that the two types of first beam waist radii $\Omega1$, $\Omega1$ (C1, C2) and $\Omega1$ (C3, C4), satisfy $\Omega1$ (C3, C4) < $\Omega$_Dmax < $\Omega1$ (C1, C2). From the above, according to the configuration of the second embodiment, even when two types of variations occur in the beam waist radius $\Omega1 = \Omega2$ due to the oblique polishing of the MCF 20p, the coupling losses can be further reduced by setting Z to be substantially equal to D1 + D2_max and by adjusting the distances d1 and d2 such that $\Omega1$ (C3, C4) < $\Omega$_Dmax < $\Omega1$ (C1, C2) holds. In this embodiment, D1 + D2 when $\Omega1$ (C1, C2) = 139 $\mu$m and D1 + D2 when $\Omega1$ (C3, C4) = 126 $\mu$m are both 91.5% or more of the distance sum maximum value D1 + D2_max. However, as long as the relationship $\Omega1$ (C3, C4) < $\Omega$_Dmax < $\Omega1$ (C1, C2) is satisfied, D1 + D2 corresponding to $\Omega1$ (C1, C2) and D1 + D2 corresponding to $\Omega1$ (C3, C4) do not necessarily have to be 91.5% or more of the distance sum maximum value D1 + D2_max. Also, as long as the above relationship holds, a combination of $\Omega1$ (C1, C2) and $\Omega1$ (C3, C4) is not limited to the above combination, and other combinations can be adopted based on FIG. 16. By setting Z to be substantially equal to D1 + D2_max, a device in which the coupling loss is robust against changes in the beam waist diameter $2\Omega1 = 2\Omega2$ can be realized.

Note that the above findings can also be applied to cases where n types of variations occur in the distance dt due to an increase in the number of cores or changes in core arrangement. That is, when defining maximum and minimum values of the n types of first beam waist radii $\Omega1$ as a "beam waist maximum radius $\Omega$max" and a "beam waist minimum radius $\Omega$min," respectively, in a case when the inter-lens distance Z is substantially equal to the distance sum maximum value D1 + D2_max, the n types of coupling losses can all be suppressed by adjusting the distances d1 and d2 such that $\Omega min < \Omega\_Dmax < \Omega max$ is satisfied. This is because, when $\Omega min < \Omega\_Dmax < \Omega max$ is satisfied in a case when Z = D1 + D2_max, the coupling loss at any $\Omega 1$ satisfying $\Omega min < \Omega 1 < \Omega max$ will always be smaller than the coupling loss at $\Omega min$ and the coupling loss at $\Omega max$.

(Third Embodiment)

Next, a description of an FIFO device according to a second embodiment of the present invention is given. This embodiment differs from the second embodiment in that an MCFp (not shown) is used instead of the MCF 20p, and the number of variations is two. MCFp has four cores C11 to C14 arranged at vertices of a square, and a core pitch p1 is set to 80 $\mu$m. That is, the core pitch p1 of the MCFp is larger than the core pitch p1 (= 50 $\mu$m) of the MCF 20p.

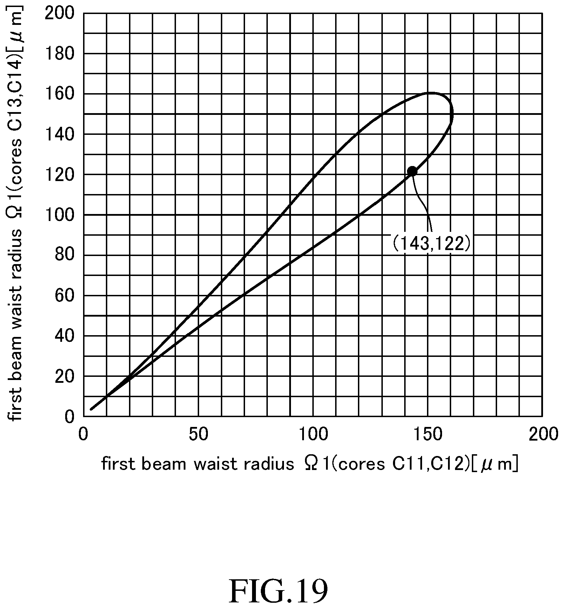

When the first beam waist radius $\Omega 1$ has two types of variations, a separation amount between them depends on the core pitch p1. Therefore, the separation amount between the two $\Omega 1$ in this embodiment is larger than the separation amount between the two $\Omega 1$ in the second embodiment. FIG. 19 is a graph for defining a relationship between the first beam waist radius $\Omega 1$ ($\Omega 1$ (C11, C12)) of light beams from the cores C11 and C12 and the first beam waist radius $\Omega 1$ ($\Omega 1$ (C13, C14)) of light beams from the cores C13 and C14. According to FIG. 19, the separation amount of $\Omega 1$ ($\Delta \Omega 1$ = 143 -122 = 21 $\mu$m) is larger than the separation amount of $\Omega 1$ ($\Delta \Omega 1$ = 146 - 133 = 13 $\mu$m) in FIG. 16.

In the FIFO device of the second embodiment, the distances d1 and d2 are adjusted such that the beam waist maximum radius $\Omega max$ and the beam waist minimum radius $\Omega min$ have values so as to satisfy a relationship $\Omega min < \Omega\_Dmax < \Omega max$ (in a case when there are two types of variations, a relationship $\Omega 1$ (C3, C4) < $\Omega\_Dmax < \Omega 1$ (C1, C2)) when the inter-lens distance Z is substantially equal to the distance sum maximum value D1 + D2_max. This configuration is useful when the separation amount between $\Omega max$ and $\Omega min$ is relatively small, but since the coupling loss at $\Omega max$ and the coupling loss at $\Omega min$ both increase as the separation amount increases, it is likely that the coupling loss cannot be suppressed appropriately.

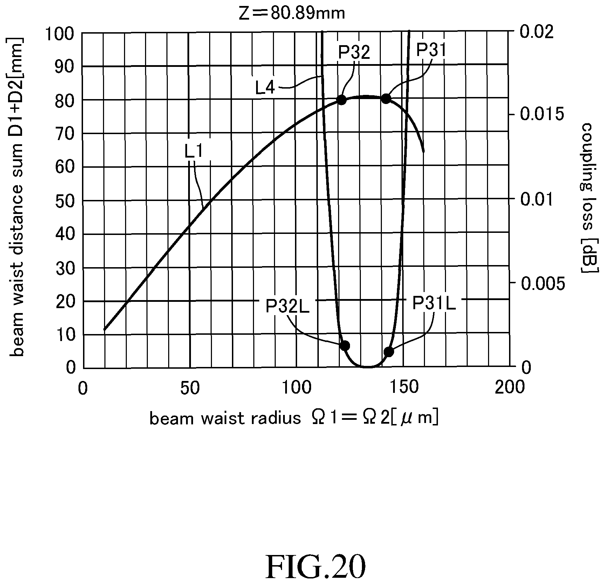

FIG. 20 is a graph serving as a comparative example in which the distances d1 and d2 are adjusted using the FIFO device of this embodiment (i.e., p1 = 80 $\mu$m) so that a relationship $\Omega 1$ (C13, C14) < $\Omega\_Dmax < \Omega 1$ (C11, C12) is satisfied. This graph corresponds to FIG. 18 (i.e., Z = D1 + D2_max). Point P31 indicates the beam waist distance sum D1 + D2 when $\Omega 1$ (C11, C12) = 143 $\mu$m (see FIG. 19). Point P31L indicates the coupling loss when $\Omega 1$ (C11, C12) = 143 $\mu$m, and its value is 9.3 $\times$ 10^-4 dB. On the other hand, point P32 indicates the beam waist distance sum D1 + D2 when $\Omega 1$ (C13, C14) = 122 $\mu$m (see FIG. 19). Point P32L indicates the coupling

loss when $\Omega 1$ (C13, C14) = 122 $\mu$m, and its value is 1.3 $\times$ 10^-3 dB. According to FIG. 20, the coupling loss increases due to an increase in the separation amount of $\Omega 1$ compared to FIG. 18. Therefore, there is a need for developing technology capable of adequately suppressing the coupling loss even when the separation amount of $\Omega 1$ increases due to the increase in the core pitch p1.

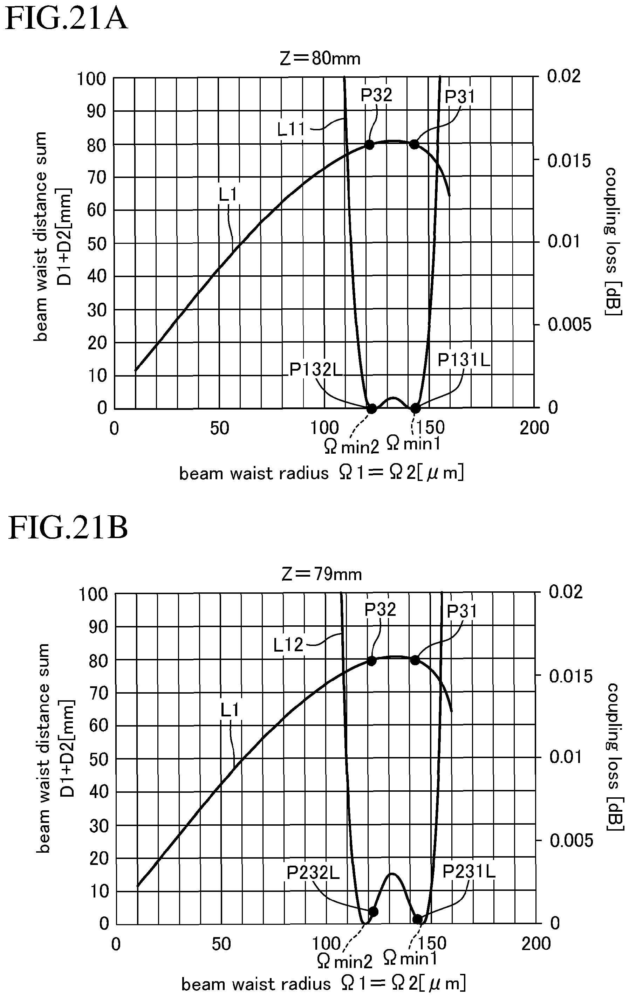

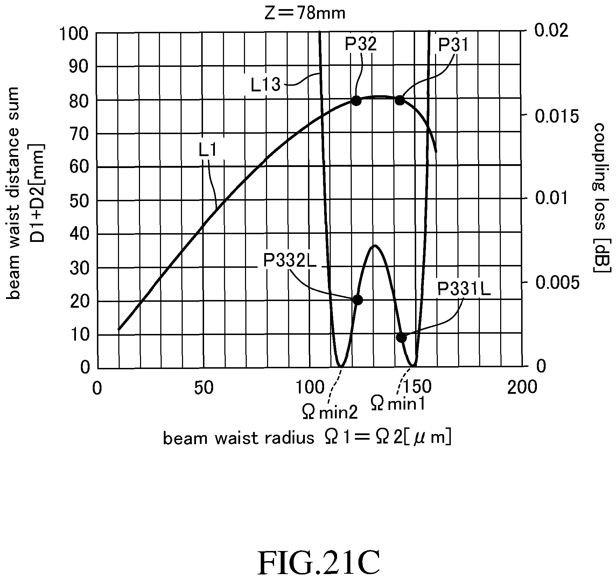

In view of the above, the inventors of the present application obtained a finding that the above problem can be solved by intentionally reducing the inter-lens distance Z from the distance sum maximum value D1 + D2_max. Specific description is given with reference to FIGs. 21A to 21C. FIGs. 21A to 21C are graphs for each defining a relationship between the beam waist radius $\Omega 1 = \Omega 2$ and the beam waist distance sum D1 + D2 (see curve L1) and a relationship between the beam waist radius $\Omega 1 = \Omega 2$ and the coupling loss (see curves L11, L12, and L13). In FIG. 21A, the inter-lens distance Z is set to 80 mm, in FIG. 21B, the inter-lens distance Z is set to 79 mm, and in FIG. 21C, the inter-lens distance Z is set to 78 mm.

According to FIGs. 21A to 21C, it can be understood that the behavior of the coupling loss depends on the inter-lens distance Z. In more detail, when Z < D1 + D2_max (= 80.89 mm), the curves L11 to L13 all have two local minima where the coupling loss becomes zero and one local maximum positioned between these two local minima. When defining the beam waist radii $\Omega 1 = \Omega 2$ at the two local minima as a "local minimum first beam waist radius $\Omega min1$" and a "local minimum second beam waist radius $\Omega min2$" in descending order, a difference between $\Omega min1$ and $\Omega min2$ increases as Z decreases. Additionally, the local maximum increases as Z decreases.

As described above, since the separation amount $\Delta \Omega 1$ (= $\Omega 1$(C11, C12) - $\Omega 1$(C13, C14)) of the first beam waist radius $\Omega 1$ having two types of variations depends on the core pitch p1, if the core pitch p1 remains unchanged, the separation amount $\Delta \Omega 1$ is also substantially constant. In this embodiment, the inter-lens distance Z is set so that a difference between $\Omega min1$ and $\Omega min2$ is substantially equal to the separation amount $\Delta \Omega 1$. In addition, the distance d1 is adjusted so that $\Omega 1$(C11, C12) and $\Omega 1$(C13, C14) (in other words, the beam waist maximum radius $\Omega max$ and the beam waist minimum radius $\Omega min$ at the time when the number of variations is two) satisfy $\Omega 1$(C11, C12) $\fallingdotseq \Omega min1$ and $\Omega 1$(C13, C14) $\fallingdotseq \Omega min2$.

In an example of FIG. 21A, Z is set so that the difference between $\Omega min1$ and $\Omega min2$ is equal to the separation amount $\Delta \Omega 1$. Additionally, the distance d1 is adjusted so that $\Omega 1$(C11, C12) $\fallingdotseq \Omega min1$ and $\Omega 1$(C13, C14) $\fallingdotseq \Omega min2$ hold. Point P131L indicates the coupling loss when $\Omega 1$(C11, C12) = 143 $\mu$m, and its value is 6.6 $\times$ 10^-5 dB. On the other hand, point P132L indicates the coupling loss when $\Omega 1$(C13, C14) = 122 $\mu$m, and its value is 3.4 $\times$ 10^-5 dB.

According to an example of FIG. 21A, it was confirmed that by setting (adjusting) Z and d1 as described above, the coupling loss can be significantly reduced compared to the example of FIG. 20. Note that in this embodiment as well, as long as relational expressions $\Delta\Omega1 \fallingdotseq \Omega min1 - \Omega min2$, $\Omega1(C11, C12) \fallingdotseq \Omega min1$, and $\Omega1(C13, C14) \fallingdotseq \Omega min2$ are satisfied, D1 + D2 corresponding to $\Omega1(C11, C12)$ and D1 + D2 corresponding to $\Omega1(C13, C14)$ do not necessarily need to be 91.5% or more of the distance sum maximum value D1 + D2_max.

In contrast, in an example of FIG. 21B (Z = 79 mm), the coupling loss when $\Omega1(C11, C12) = 143\ \mu m$ was $2.9 \times 10^{-4}$ dB (see point P231L), and the coupling loss when $\Omega1(C13, C14) = 122\ \mu m$ was $8.2 \times 10^{-4}$ dB (see point P232L). In an example of FIG. 21C (Z = 78 mm), the coupling loss when $\Omega1(C11, C12) = 143\ \mu m$ was $1.8 \times 10^{-3}$ dB (see point P331L), and the coupling loss when $\Omega1(C13, C14) = 122\ \mu m$ was $4.0 \times 10^{-3}$ dB (see point P332L). As such, the coupling loss increases as Z excessively decreases.

From the above, according to this embodiment, even when the separation amount of $\Omega1$ increases due to the increase in the core pitch p1, the coupling loss can be appropriately suppressed by intentionally reducing the inter-lens distance Z and by adjusting the distance d1. Also, the behavior of the coupling loss near the local minima becomes more gradual as Z increases (see FIGs. 11A to 11C and FIGs. 21A to 21C). Therefore, a device in which the coupling loss is robust against changes in the beam waist diameter $2\Omega1 = 2\Omega2$ can be realized.

The inventors of the present application conducted a similar simulation also for an FIFO device having the MCF20p (that is, p1 = 50 $\mu m$). A combination of $\Omega1(C1, C2) = 141\ \mu m$ and $\Omega1(C3, C4) = 128\ \mu m$ was adopted for $\Omega1(C1, C2)$ and $\Omega1(C3, C4)$. First, as a comparative example, the coupling loss when Z = D1 + D2_max (= 80.89 mm) was $3.8 \times 10^{-4}$ dB when $\Omega1(C1, C2) = 141\ \mu m$ and $5.0 \times 10^{-5}$ dB when $\Omega1(C3, C4) = 128\ \mu m$, with an average value of $2.2 \times 10^{-4}$ dB. In contrast, the coupling loss when Z = 80.45 mm was $6.7 \times 10^{-5}$ dB when $\Omega1(C1, C2) = 141\ \mu m$ and $4.6 \times 10^{-5}$ dB when $\Omega1(C3, C4) = 128\ \mu m$, with an average value of $5.6 \times 10^{-5}$ dB. The coupling loss when Z = 80.00 mm was $1.2 \times 10^{-5}$ dB when $\Omega1(C1, C2) = 141\ \mu m$ and $4.4 \times 10^{-4}$ dB when $\Omega1(C3, C4) = 128\ \mu m$, with an average value of $2.2 \times 10^{-4}$ dB. When comparing the average values with each other, it was found that the coupling loss could be most reduced when Z = 80.45 mm.

In the above, the FIFO devices according to the embodiments and the modification example have been described, but the present invention is not limited to the above-mentioned embodiments and the modification example, and various changes are possible within the range not departing from the object of the present invention.

For example, instead of a group of single-core optical fibers with single-mode, a group of single-core optical fibers comprising a plurality of single-core optical fibers with multi-mode may be used. As long as the FIFO device is designed so that the above Conditions 1 and 2 are satisfied for 0th mode light beam, the coupling loss can be reduced even when multi-mode light beam is propagated.

Also, the core arrangement of the MCF does not have to be symmetrical. Even when the core arrangement is asymmetrical, the first lens 30 and the group of the second lenses 40 can function appropriately as an FIFO device by arranging the group of the second lenses 40 at positions corresponding to the light beams exited from the first lens 30, which have been emitted from the respective cores.

Additionally, the SCFs and the MCFs are not limited to columnar/cylindrical shapes and each may have a pillar shape whose cross-section orthogonal to the axis is any shape (e.g., an ellipse or a polygon).

Furthermore, the end faces 51a to 54a of the SCFs 51 to 54 may be obliquely polished. In this case, in order to reduce the optical coupling loss, it is necessary to incline the principal rays of the light beams incident on the end faces 51a to 54a by a predetermined angle with respect to the optical axis of the lenses 41 to 44. Therefore, unlike FIG. 4, the principal rays of the light beams incident on the lenses 41 to 44 are each designed to pass through a position shifted from the focal point f2 by a predetermined distance.

Furthermore, the FIFO device of the above embodiments and the modification example can also function as a device in which the light beam propagates in the second progress direction.

Reference Signs List

10: FIFO device, 20: multi-core optical fiber, 20a: end face, 30: first lens, 40: a group of second lenses, 41, 42, 43, 44: second lens, 50: a group of single-core optical fibers, 51, 52, 53, 54: single-core optical fiber

**Claims**

1. A Fan-in/Fan-out device (10) comprising:

   a multi-core optical fiber (20) which has a pillar shape, and includes a plurality of first cores (C1 to C4) extending along an axial direction, and a common cladding (CL) surrounding the plurality of first cores;
   a first lens (30) having a first optical axis parallel to a center axis of the multi-core optical fiber (20), and being arranged so as to face the multi-core optical fiber;
   a group of second lenses (40) including a plurality of second lenses (41 to 44) each having a second optical axis parallel to the first optical axis; and
   a group of single-core optical fibers (50) including the same number of single-core optical fibers (51 to 54) as the number of the second lenses (41 to 44), each single-core optical fiber having a pillar shape, and including one second core (C) extending along a center axis parallel to the second optical axis and a cladding (CLs) surrounding the second core (C),

and being configured to propagate light beam in either one direction of a first progress direction and a second progress direction, the first progress direction being a progress direction of light beams which are emitted from the respective first cores (C1 to C4) of the multi-core optical fiber (20), pass through the first lens (30) and the second lenses (41 to 44) corresponding to the respective first cores, and converge on the respective second cores (C) of the single-core optical fibers (51 to 54) corresponding to the second lenses, and the second progress direction a being a progress direction of light beams which are emitted from the respective second cores, pass through the corresponding second lenses and the first lens, and converge on the respective first cores corresponding to the second lenses,

wherein, when defining a beam waist diameter of each of the light beams exited from the first lens (30) as a first beam waist diameter ($2\Omega 1$), and defining a distance from the first lens to a beam waist position in a progress direction of a principal ray of each of the light beams as a first beam waist distance (D1) based on an assumption that the light beams propagate in the first progress direction, defining a beam waist diameter of each of the light beams exited from the respective second lenses (41 to 44) as a second beam waist diameter ($2\Omega 2$), and defining a distance from the second lenses to a beam waist position in a progress direction of a principal ray of each of the light beams as a second beam waist distance (D2) based on an assumption that the light beams propagate in the second progress direction, and defining a maximum value of a beam waist distance sum (D1 + D2) at a time when an inter-lens distance (Z) is equal to the beam waist distance sum as a distance sum maximum value (D1 + D2_max), the inter-lens distance being a distance between the first lens (30) and the respective second lenses (41 to 44) in a progress direction of a principal ray of each of the light beams, and the beam waist distance sum being a sum of the first beam waist distance (D1) and the second beam waist distance (D2) at a time when the first beam waist diameter ($2\Omega 1$) matches the second beam waist diameter ($2\Omega 2$),

the multi-core optical fiber (20), the first lens (30), the group of the second lenses (40), and the group of the single-core optical fibers (50) are arranged such that the inter-lens distance

(Z) is substantially equal to the distance sum maximum value (D1 + D2_max), and the beam waist distance sum (D1 + D2) is 91.5% or more of the distance sum maximum value.

2. The Fan-in/Fan-out device according to claim 1,

wherein an end face (20ap) of the multi-core optical fiber (20p) is obliquely polished so as to incline in a predetermined inclination direction with respect to a plane orthogonal to a center axis thereof by a predetermined polishing angle, and thereby occurring n types of variations in a distance (d1(1) to d1(4)) between the respective first cores (C1 to C4) and the first lens (30) in a progress direction of a principal ray of each light beam, and occurring n types of variations in the first beam waist diameter ($2\Omega 1$) of each of the light beams emitted from the respective first cores,

wherein each of the single-core optical fibers (51 to 54) is arranged with respect to the corresponding second lens (41 to 44) such that the second beam waist diameter ($2\Omega 2$) of the light beam corresponding to each of the single-core optical fiber matches the corresponding first beam waist diameter ($2\Omega 1$), and

wherein the inter-lens distance (Z) is substantially equal to the distance sum maximum value (D1 + D2_max), and the n types of the beam waist distance sums (D1 + D2) each corresponding to n types of the first and the second beam waist diameters ($2\Omega 1 = 2\Omega 2$) are all 91.5% or more of the distance sum maximum value (D1 + D2_max).

3. A Fan-in/Fan-out device (10) comprising:

a multi-core optical fiber (20p) which has a pillar shape, and includes a plurality of first cores (C1 to C4) extending along an axial direction, and a common cladding (CL) surrounding the plurality of first cores;

a first lens (30) having a first optical axis parallel to a center axis of the multi-core optical fiber (20p), and being arranged so as to face the multi-core optical fiber;

a group of second lenses (40) including a plurality of second lenses (41 to 44) each having a second optical axis parallel to the first optical axis; and

a group of single-core optical fibers (50) including the same number of single-core optical fibers (51 to 54) as the number of the second lenses (41 to 44), each single-core optical fiber having a pillar shape, and including one second core (C) extending along a center axis parallel to the second optical axis and a cladding (CLs) surrounding the second core (C),

and being configured to propagate light beam in either one direction of a first progress direction and a second progress direction, the first progress direction being a progress direction of light beams which are emitted from the respective first cores (C1 to C4) of the multi-core optical fiber (20p), pass through the first lens (30) and the second lenses (41 to 44) corresponding to the respective first cores, and converge on the respective second cores (C) of the single-core optical fibers (51 to 54) corresponding to the second lenses, and the second progress direction a being a progress direction of light beams which are emitted from the respective second cores, pass through the corresponding second lenses and the first lens, and converge on the respective first cores corresponding to the second lenses,

wherein, when defining a beam waist diameter of each of the light beams exited from the first lens (30) as a first beam waist diameter ($2\Omega1$), and defining a distance from the first lens to a beam waist position in a progress direction of a principal ray of each of the light beams as a first beam waist distance (D1) based on an assumption that the light beams propagate in the first progress direction, defining a beam waist diameter of each of the light beams exited from the respective second lenses (41 to 44) as a second beam waist diameter ($2\Omega2$), and defining a distance from the second lenses to a beam waist position in a progress direction of a principal ray of each of the light beams as a second beam waist distance (D2) based on an assumption that the light beams propagate in the second progress direction, and defining a maximum value of a beam waist distance sum (D1 + D2) at a time when an inter-lens distance (Z) is equal to the beam waist distance sum as a distance sum maximum value (D1 + D2_max), the inter-lens distance being a distance between the first lens (30) and the respective second lenses (41 to 44) in a progress direction of a principal ray of each of the light beams, and the beam waist distance sum being a sum of the first beam waist distance (D1) and the second beam waist distance (D2) at a time when the first beam waist diameter ($2\Omega1$) matches the second beam waist diameter ($2\Omega2$),

an end face (20ap) of the multi-core optical fiber (20p) is obliquely polished so as to incline in a predetermined inclination direction with respect to a plane orthogonal to a center axis thereof by a predetermined polishing angle, and thereby occurring n types of variations in a distance (d1(1) to d1(4)) between the respective first cores (C1 to C4) and the first lens (30) in a progress direction of a principal ray of each light beam, and occurring n types of variations in the first beam waist diameter ($2\Omega1$) of each of the light beams emitted from the respective first cores,

each of the single-core optical fibers (51 to 54) is arranged with respect to the corresponding second lens (41 to 44) such that the second beam waist diameter ($2\Omega2$) of the light beam corresponding to each of the single-core optical fiber matches the corresponding first beam waist diameter ($2\Omega1$),

further, when defining the first and the second beam waist diameters ($2\Omega1 = 2\Omega2$) at the time when the beam waist distance sum (D1 + D2) is the distance sum maximum value (D1 + D2_max) as a beam-waist-diameter-at-maximum-distance ($\Omega\_Dmax$), and defining a maximum value and a minimum value of n types of the first and the second beam waist diameters as a beam waist maximum diameter ($2\Omega max$) and a beam waist minimum diameter ($2\Omega min$), respectively,

the multi-core optical fiber (20p) is arranged with respect to the first lens (30) at such a position that the beam waist maximum diameter ($2\Omega max$) is greater than the beam-waist-diameter-at-maximum-distance ($\Omega\_Dmax$), and the beam waist minimum diameter ($2\Omega min$) is smaller than the beam-waist-diameter-at-maximum-distance.

4. The Fan-in/Fan-out device according to claim 3, wherein the inter-lens distance (Z) is substantially equal to the distance sum maximum value (D1 + D2_max).

5. The Fan-in/Fan-out device according to claim 3,

wherein a curve defining a relationship between the first and the second beam waist diameters ($2\Omega1 = 2\Omega2$) and optical coupling loss includes two local minima where the optical coupling loss becomes zero, and one local maximum positioned between the two local minima when the inter-lens distance (Z) is less than the distance sum maximum value (D1 + D2_max),

wherein when defining the first and the second beam waist diameters at the two local minima as a local minimum first beam waist diameter ($2\Omega min1$) and a local minimum second beam waist diameter ($2\Omega min2$) in descending order, a difference between the local minimum first beam waist diameter and the local minimum second beam waist diameter increases as the inter-lens distance (Z) decreases,

wherein when n = 2,

the inter-lens distance (Z) is set so that the difference is substantially equal to a separation amount between the beam waist maximum diameter ($2\Omega_{max}$) and the beam waist minimum diameter ($2\Omega_{min}$), and the multi-core optical fiber (20p) is arranged with respect to the first lens (30) at such a position that the beam waist maximum diameter ($2\Omega_{max}$) substantially matches the local minimum first beam waist diameter ($2\Omega_{min1}$), and the beam waist minimum diameter ($2\Omega_{min}$) substantially matches the local minimum second beam waist diameter ($2\Omega_{min2}$).

FIG.1

# FIG.2

# FIG.3

FIG.4

FIG.5

FIG.6

FIG.7

FIG.8A

FIG.8B

FIG.9

FIG.10

# FIG.11A

Z=60mm
Ω1=Ω2=76μm

L2

L1

beam waist distance sum D1+D2[mm] (vertical axis, left: 0–100)
coupling loss [dB] (vertical axis, right: 0–0.05)
beam waist radius Ω1=Ω2[μm] (horizontal axis: 0–200)

# FIG.11B

Z=70mm
Ω1=Ω2=94μm

L3

L1

beam waist distance sum D1+D2[mm] (vertical axis, left: 0–100)
coupling loss [dB] (vertical axis, right: 0–0.05)
beam waist radius Ω1=Ω2[μm] (horizontal axis: 0–200)

FIG.11C

FIG.12A

FIG.12B

FIG.13

FIG.14

FIG.15

FIG.16

FIG.17

FIG.18

FIG.19

FIG.20

## FIG.21A

Z＝80mm

## FIG.21B

Z＝79mm

FIG.21C

## INTERNATIONAL SEARCH REPORT

| | International application No. |
|---|---|
| | **PCT/JP2023/006360** |

**A. CLASSIFICATION OF SUBJECT MATTER**

***G02B 6/32***(2006.01)i; ***G02B 6/02***(2006.01)i
FI:  G02B6/32; G02B6/02 461

According to International Patent Classification (IPC) or to both national classification and IPC

**B. FIELDS SEARCHED**

Minimum documentation searched (classification system followed by classification symbols)

G02B6/02; G02B6/26-6/27; G02B6/30-6/34; G02B6/42-6/43

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2014/034726 A1 (KONICA MINOLTA, INC.) 06 March 2014 (2014-03-06) paragraphs [0019]-[0034], fig. 1, 2 | 1-4 |
| A | | 5 |
| Y | JP 2016-118717 A (TOYO SEIKAN GROUP HOLDINGS LTD.) 30 June 2016 (2016-06-30) paragraphs [0043]-[0050] | 1-4 |
| Y | WO 2022/004220 A1 (SUMITOMO ELECTRIC INDUSTRIES, LTD.) 06 January 2022 (2022-01-06) paragraphs [0028]-[0039], [0063]-[0070], fig. 1-3 | 2-4 |
| A | | 5 |
| A | JP 2001-305376 A (NIPPON SHEET GLASS CO., LTD.) 31 October 2001 (2001-10-31) entire text, all drawings | 1-5 |
| A | CN 102109645 A (BEIJING JIAOTONG UNIVERSITY) 29 June 2011 (2011-06-29) entire text, all drawings | 1-5 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

EP 4 488 731 A1

**INTERNATIONAL SEARCH REPORT**

International application No.

**PCT/JP2023/006360**

**C.      DOCUMENTS CONSIDERED TO BE RELEVANT**

| Category* | Citation of document, with indication, where appropriate, of the relevant passages | Relevant to claim No. |
|---|---|---|
| P, A | WO 2022/145308 A1 (KOHOKU KOGYO CO., LTD.) 07 July 2022 (2022-07-07) entire text, all drawings | 1-5 |

Form PCT/ISA/210 (second sheet) (January 2015)

39

## INTERNATIONAL SEARCH REPORT
### Information on patent family members

| International application No. |
| --- |
| **PCT/JP2023/006360** |

| Patent document cited in search report | | | Publication date (day/month/year) | Patent family member(s) | | | Publication date (day/month/year) |
| --- | --- | --- | --- | --- | --- | --- | --- |
| WO | 2014/034726 | A1 | 06 March 2014 | US 2015/0260917 A1 paragraphs [0046]-[0061], fig. 1, 2 CN 104603655 A | | | |
| JP | 2016-118717 | A | 30 June 2016 | US 2017/0329088 A1 paragraphs [0044]-[0050] WO 2016/104020 A1 EP 3239749 A1 TW 201626016 A KR 10-2017-0073654 A CN 107111065 A | | | |
| WO | 2022/004220 | A1 | 06 January 2022 | CN 115698795 A | | | |
| JP | 2001-305376 | A | 31 October 2001 | US 2001/0024548 A1 EP 1126302 A2 | | | |
| CN | 102109645 | A | 29 June 2011 | (Family: none) | | | |
| WO | 2022/145308 | A1 | 07 July 2022 | JP 2022-104211 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6554891 B